# EUROPEAN PATENT SPECIFICATION

(11) **EP 3 236 086 B1**
(45) Date of publication and mention of the grant of the patent: **17.01.2024**
(21) Application number: 17155159.1
(22) Date of filing: 08.02.2017
(51) Int. Cl.: F15B 20/00, F15B 13/043

(54) **PROPORTIONAL PRESSURE CONTROLLER WITH ISOLATION VALVE ASSEMBLY**
PROPORTIONALER DRUCKREGLER MIT ISOLIERUNGSVENTILANORDNUNG
RÉGULATEUR DE PRESSION PROPORTIONNELLE AVEC ENSEMBLE DE VANNE D'ISOLEMENT

(30) Priority: 24.02.2016 US 201615052307
(43) Date of publication of application: 25.10.2017
(73) Proprietor: MAC Valves, Inc., Wixom, Michigan 48393 (US)
(72) Inventor: NEFF, Robert H., Bloomfield Village, MI 48301 (US); NEFF, Matthew, Birmingham, MI 48009-1609 (US); WILLIAMS, Kevin C., Wixom, MI 48393 (US); RICHARDSON, Joseph, Milford, MI 48381 (US)
(74) Representative: Murgitroyd & Company

(56) References cited:
- EP-A2- 2 354 562
- WO-A1-2015/155786
- DE-A1-102012 021 462
- DE-A1-102014 010 940
- JP-A- S6 469 807
- JP-U- S57 170 404

## Description

The present disclosure relates to proportional pressure controllers adapted for use in pneumatic systems and particularly to proportional pressure controllers with an isolation valve assembly.

This section provides background information related to the present disclosure.

Proportional pressure controllers often include main internal valves which are moved to permit a pressurized fluid to be discharged to a pressure controlled device. Such proportional pressure controllers regulate the operating pressure of the pressurized fluid at the pressure controlled device. The main valves are commonly repositioned using solenoids operators. This configuration increases weight and expense of the proportional pressure controller and requires significant electrical current to reposition the main valves.

Known proportional pressure controllers are also often susceptible to system pressure undershoot or overshoot. Due to the mass and operating time of the main valves, signals controlling the main valves to reduce or stop pressurized fluid flow to the pressure controlled device may occur too soon or too late to avoid either not reaching or exceeding the desired operating pressure. When this occurs, the control system operating the solenoid actuators begins a rapid opening and closing sequence as the controller "hunts" for the desired operating pressure. This rapid operation known as "motor-boating", increases wear and the operating costs associated with the proportional pressure controller.

Known proportional pressure controllers often include an inlet port, an outlet port, and an exhaust port. A high pressure fluid is typically supplied to the inlet port, after passing through the proportional pressure controller, the fluid exits to the pressure controlled device through the outlet port, and excess fluid pressure is vented from the proportional pressure controller through the exhaust port. Another problem associated with known proportional pressure controllers is that it is difficult to achieve zero pressure at the outlet port of the proportional pressure controller even when a zero pressure condition at the outlet port is desired. The inability to create zero pressure at the outlet port of the proportional pressure controller can negatively affect the operation and/or performance of the pressure controlled device.

EP-A-2354562 discloses a proportional pressure controller with a body which includes inlet, outlet and exhaust ports and poppet valves to control fluid flow. Each of JP-S64/69807, DE-102012021462A, DE-102014010940, JP-A57/170404 and WO-A-2015/155786 discloses an isolation valve which permits fluid flow from an inlet to an outlet in an open position and blocks fluid flow from the inlet to the outlet in a closed position.

This section provides a general summary of the disclosure, and is not a comprehensive disclosure of its full scope or all of its features.

In accordance with one aspect of the invention, a proportional pressure controller according to claim 1 is provided that minimizes the likelihood of having pressure at an outlet port of the proportional pressure controller when a zero pressure condition at the outlet port is desired.

Further areas of applicability will become apparent from the description provided herein. The description and specific examples in this summary are intended for purposes of illustration only and are not intended to limit the scope of the present invention.

The drawings described herein are for illustrative purposes only of selected embodiments and not all possible implementations, and are not intended to limit the scope of the present invention.

The scope of the invention is defined by the appended claims.
Figure 1 is a side cross-sectional view of an exemplary proportional pressure controller which is provided for illustrative purposes only and does not form part of the claimed invention;
Figure 2A is another side cross-sectional view of the exemplary proportional pressure controller of Figure 1 where an exemplary isolation valve assembly is preventing fluid from entering an inlet port in a body of the exemplary proportional pressure controller;
Figure 2B is another side cross-sectional view of the exemplary proportional pressure controller of Figure 1 where the exemplary isolation valve assembly is supplying the inlet port in the body of the exemplary proportional pressure controller with fluid and where fluid is being discharged through an outlet port in the body of the exemplary proportional pressure controller;
Figure 2C is another side cross-sectional view of the exemplary proportional pressure controller of Figure 1 where fluid pressure in an outlet flow passage and an exhaust/outlet common passage in the body of the exemplary proportional pressure controller is being relieved by expelling fluid from the outlet flow passage and the exhaust/outlet common passage through an exhaust flow passage and an exhaust port in the body of the exemplary proportional pressure controller;
Figure 3 is a side cross-sectional view of another exemplary proportional pressure controller which is provided for illustrative purposes only and does not form part of the claimed invention;
Figure 4A is another side cross-sectional view of the exemplary proportional pressure controller of Figure 3 where an exemplary isolation valve assembly is preventing fluid from exiting the outlet port in the body of the exemplary proportional pressure controller;
Figure 4B is another side cross-sectional view of the exemplary proportional pressure controller of Figure 3 where the exemplary isolation valve assembly is discharging fluid exiting the outlet port in the body of the exemplary proportional pressure controller;
Figure 4C is another side cross-sectional view of the exemplary proportional pressure controller of Figure 3 where fluid pressure in the outlet flow passage and the exhaust/outlet common passage in the body of the exemplary proportional pressure controller is being relieved by expelling fluid from the outlet flow passage and the exhaust/outlet common passage through the exhaust flow passage and the exhaust port in the body of the exemplary proportional pressure controller;
Figure 5 is a side cross-sectional view of a proportional pressure controller constructed in accordance with the present invention;
Figure 6A is another side cross-sectional view of the proportional pressure controller of Figure 5 where the isolation valve assembly is preventing fluid from exiting the outlet port in the body of the exemplary proportional pressure controller;
Figure 6B is another side cross-sectional view of the proportional pressure controller of Figure 5 where the isolation valve assembly is discharging fluid exiting the outlet port in the body of the exemplary proportional pressure controller; and
Figure 6C is another side cross-sectional view of the proportional pressure controller of Figure 5 where fluid pressure in the outlet flow passage and the exhaust/outlet common passage in the body of the proportional pressure controller is being relieved by expelling fluid from the outlet flow passage and the exhaust/outlet common passage through the exhaust flow passage and the exhaust port in the body of theproportional pressure controller.

Corresponding reference numerals indicate corresponding parts throughout the several views of the drawings.

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to," "connected to" or "coupled to" another element or layer, it may be directly on, engaged, connected or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath", "below", "lower", "above", "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

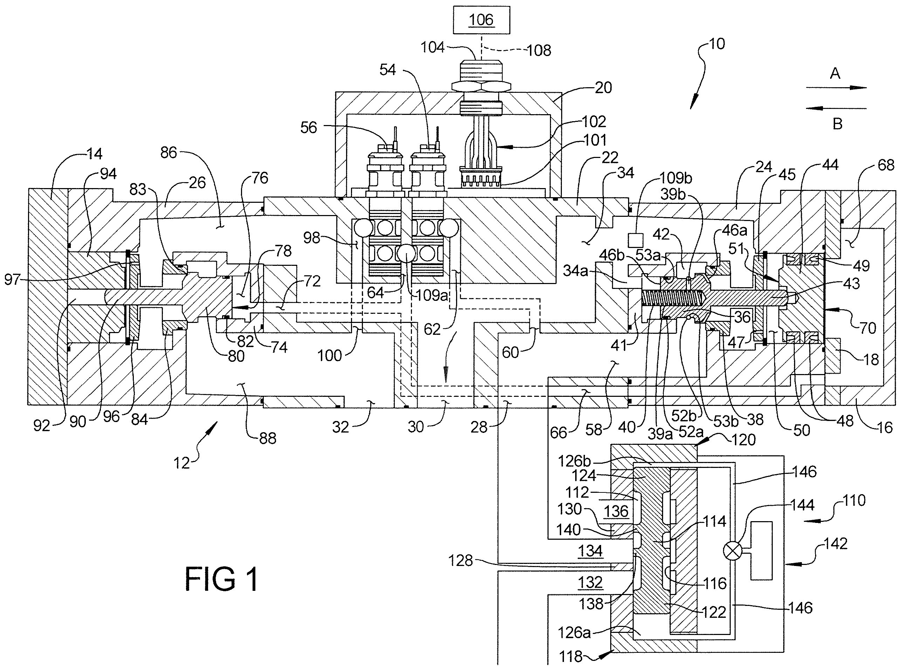

Referring to Figure 1, an illustrative example of a proportional pressure controller 10 which does not fall within the scope of the present invention includes a body 12 having a first end cap 14 and a second end cap 16 that is oppositely arranged on the body 12 relative to the first end cap 14. The first and second end caps 14, 16 can be releasably fastened or fixedly connected to body 12. A spacer member 18 can also be included with body 12 whose purpose will be discussed in greater detail below. A controller operator 20 can be connected such as by fastening or fixed connection to a central body portion 22. Body 12 can further include an inlet body portion 24 connected between central body portion 22 and spacer member 18, with spacer member 18 positioned between inlet body portion 24 and second end cap 16. Body 12 can further include an exhaust body portion 26 positioned between central body portion 22 and first end cap 14. Optionally, the proportional pressure controller 10 can be provided in the form of a generally rectangular-shaped block such that multiple ones of the proportional pressure controllers 10 can be arranged in a side-by-side configuration. This geometry also promotes use of the proportional pressure controller 10 in a manifold configuration.

According to several illustrative embodiments, the inlet and exhaust body portions 24, 26 are releasably and sealingly connected to the central body portion 22. The proportional pressure controller 10 can include each of an inlet port 28, an outlet port 30, and an exhaust port 32 each created in the central body portion 22. A pressurized fluid 33 such as pressurized air can be discharged from the proportional pressure controller 10 via outlet port 30. The outlet port 30 is open to and operably receives the pressurized fluid 33 from an outlet flow passage 34 that is defined within the body 12. The outlet flow passage 34 includes a pressure balancing segment 34a. Flow to the outlet flow passage 34 can be isolated using an inlet poppet valve 36. The inlet poppet valve 36 has a longitudinal cavity 39a and a vent passageway 39b. The inlet poppet valve 36 is normally seated against an inlet valve seat 38 and is held in the seated position shown in Figure 1 by a biasing member 40 such as a compression spring. When the inlet poppet valve 36 is closed, no fluid flow can pass into the outlet flow passage 34. The biasing member 40 can be held in position by contact with an end wall 41 of inlet body portion 24, and oppositely by being partially received in the longitudinal cavity 39a that is defined within the inlet poppet valve 36. Inlet poppet valve 36 is received within an inlet valve cavity 42 in the body 12 such that the inlet poppet valve 36 can axially slide within the inlet valve cavity 42 in each of an inlet valve closing direction "A" extending biasing member 40 and an opposite inlet valve opening direction "B". When the inlet poppet valve 36 moves in the inlet valve opening direction "B", the inlet poppet valve 36 compresses the biasing member 40. An inlet valve stem 43 is integrally connected to the inlet poppet valve 36, extending axially from inlet poppet valve 36. A free end of inlet valve stem 43 contacts a piston 44. Inlet valve stem 43 is slidably disposed through a first boundary wall 45 before contacting piston 44 to help control an axial alignment of inlet poppet valve 36 and to promote a perimeter seal of an inlet poppet seat engagement member 46a with inlet valve seat 38 in the closed position. The inlet poppet valve 36 has an opposing face 46b, opposite the inlet poppet seat engagement member 46a, that faces the pressure balancing segment 34a of the outlet flow passage 34. The inlet poppet seat engagement member 46a and opposing face 46b of the inlet poppet valve 36 have equal surface areas. Accordingly, the inlet poppet valve 36 operates in a pressure balanced condition. Pressurized fluid 33 can free-flow through first boundary wall 45 via at least one hole 47 and/or through the bore that permits passage of inlet valve stem 43. A size and quantity of the at least one hole 47 controls the time required for pressure in outlet flow passage 34 to act on piston 44 and therefore the speed of piston movement. The pressure acting through the at least one hole 47 creates a pressure biasing force acting to move piston 44 toward the closed position. Piston 44 can be provided with at least one, and according to several embodiments, a plurality of resilient U-cup seals 48 which are individually received in individual seal grooves 49 created about a perimeter of piston 44. U-cup seals 48 provide a fluid pressure seal about piston 44 as piston 44 axially slides within a cylinder cavity 50 that is defined within the body 12.

Piston 44 moves coaxially with the inlet poppet valve 36 in inlet valve closing direction "A" or the inlet valve opening direction "B". First boundary wall 45 defines a first boundary (a non-pressure boundary) and piston 44 defines a second boundary (a pressure boundary) of the cylinder cavity 50. Piston 44 can move in the inlet valve opening direction "B" until an end 51 of piston 44 contacts first boundary wall 45, since the first boundary wall 45 is fixed in position. Piston 44 is retained within cylinder cavity 50 by contact with first boundary wall 45 by the previously described pressure biasing force created by pressurized fluid 33 freely flowing through the holes 47. Piston 44 is also retained within cylinder cavity 50 by contact at an opposite end of cylinder cavity 50 with portions of spacer member 18, which extend radially past a cylindrical wall of cylinder cavity 50 as shown in Figure 1. An elastic seal member 52a such as an O-ring can be positioned within a slot or circumferential groove 53a created externally about a perimeter of inlet poppet valve 36. Elastic seal member 52a seals the inlet poppet valve 36 against the inlet valve cavity 42.

The longitudinal cavity 39a in the inlet poppet valve 36 is open to and disposed in fluid communication with the pressure balancing segment 34a of the outlet flow passage 34. The vent passageway 39b extends between the longitudinal cavity 39a and the inlet valve cavity 42. Another elastic seal member 52b such as an O-ring can be positioned within a slot or circumferential groove 53b created externally about a perimeter of the inlet poppet valve 36. The vent passageway 39b opens into circumferential groove 53b such that the elastic seal member 52b blocks the vent passageway 39b and prevents fluid in the inlet valve cavity 42 from entering the vent passageway 39b. When pressure in the longitudinal cavity 39a of the inlet poppet valve 36 is greater than pressure in the inlet valve cavity 42, the pressure differential slightly expands the elastic seal member 52b allowing fluid to flow out from the vent passageway 39b. Accordingly, the elastic seal member 52b acts as a check valve for the vent passageway 39b, allowing fluid to flow through the vent passageway 39b in one direction from the longitudinal cavity 39a in the inlet poppet valve 36 to the inlet valve cavity 42, but not in the opposite direction (from the inlet valve cavity 42 to the longitudinal cavity 39a in the inlet poppet valve 36). Therefore, the vent passageway 39b in combination with the elastic seal member 52b neutralizes pressure differences between the pressure balancing segment 34a of the outlet flow passage 34 and the inlet valve cavity 42.

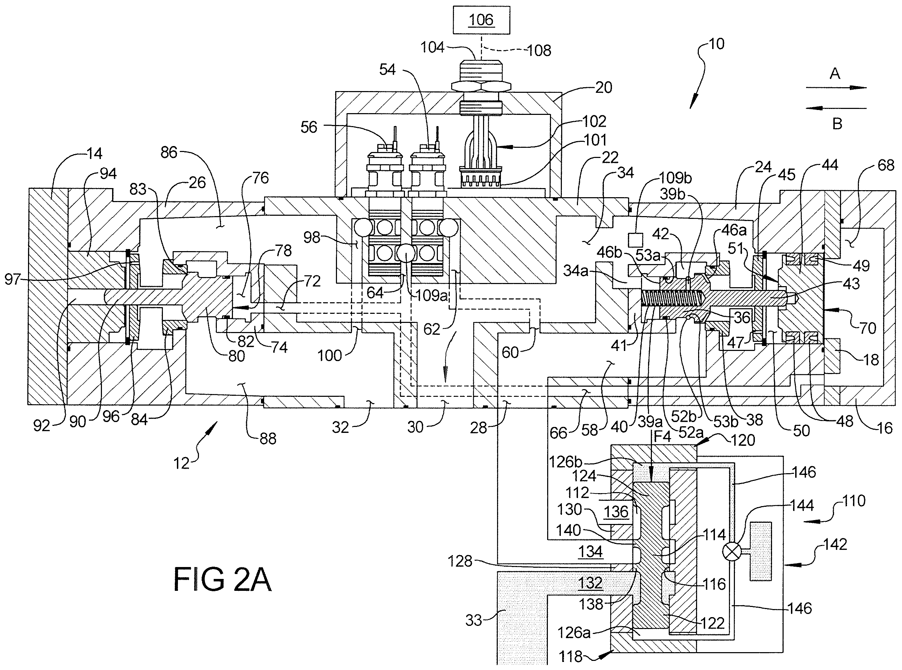

The proportional pressure controller 10 can be operated using each of a fill valve 54 and a dump valve 56, which can be releasably connected to central body portion 22 within controller operator 20. Pressurized fluid 33 (Figures 2A-2C) such as pressurized air received in inlet port 28 may be filtered or purified. Fluid that can back-flow into the proportional pressure controller 10 via outlet port 30 and outlet flow passage 34 is potentially contaminated fluid. According to several embodiments, the fill and dump valves 54, 56 are isolated from the potentially contaminated fluid such that only the filtered, pressurized fluid 33 that is received via the inlet port 28 flows through the fill valve 54 and the dump valve 56. An inlet flow passage 58 communicates the pressurized fluid 33 between inlet port 28 and the inlet valve cavity 42. In other words, the inlet valve cavity 42 connects the inlet flow passage 58 to the outlet flow passage 34. Therefore, the inlet flow passage 58 is fluidly isolated from outlet flow passage 34 by the inlet poppet valve 36, which can be normally closed. A fluid supply port 60 communicates with and is open to the inlet flow passage 58. The fluid supply port 60 leads to a fill inlet passage 62, which is isolated from outlet flow passage 34 and provides pressurized fluid 33 to the fill valve 54. A fill valve discharge passage 64 provides a path for pressurized fluid 33 flowing through the fill valve 54 to be directed to an inlet of dump valve 56 and a plurality of different passages.

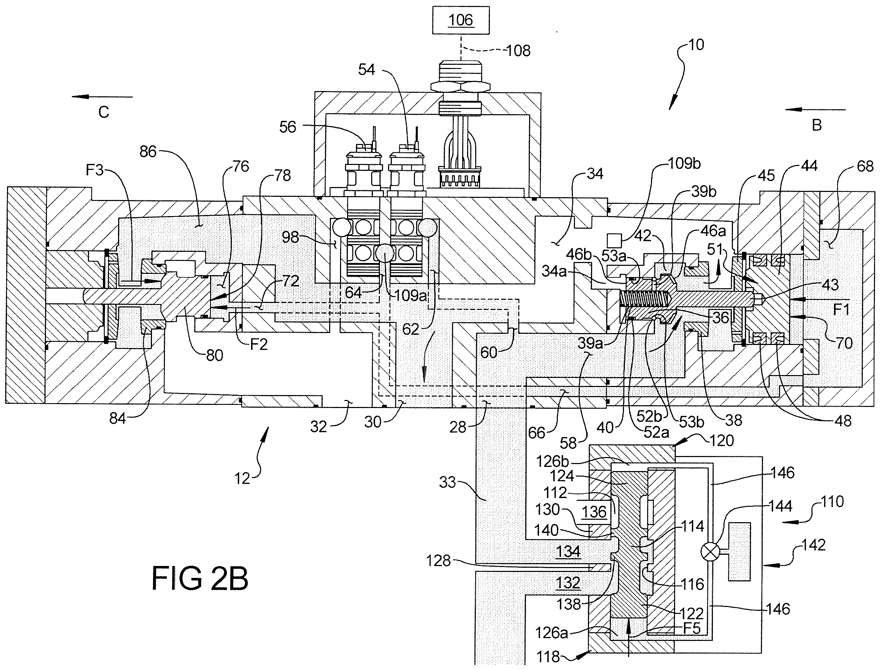

One of these passages includes a piston pressurization passage 66, which directs pressurized fluid 33 from the fill valve discharge passage 64 to a piston pressurization chamber 68 created in second end cap 16. Pressurized fluid 33 in the piston pressurization chamber 68 generates a first force F1 (Figure 2B) acting on a piston end face 70 of piston 44. A surface area of the piston end face 70 is larger than a surface area of the inlet poppet valve 36 that is in contact with inlet valve seat 38, therefore, when the fill valve 54 opens or continues to open further, the net force created by the pressurized fluid 33 acting on the piston end face 70 causes piston 44 to initially move or move further in the inlet valve opening direction "B" and away from inlet valve seat 38. This initially opens the inlet poppet valve 36 or further increases flow through the inlet valve cavity 42 to allow pressurized fluid 33 to flow into the outlet flow passage 34 and exit the proportional pressure controller 10 at the outlet port 30. Therefore, the proportional pressure controller 10 can initiate flow of the pressurized fluid 33 between the inlet port 28 and the outlet port 30 if no flow is present at the outlet port 30, or the proportional pressure controller 10 can maintain, increase, or decrease the pressure of an existing flow of the pressurized fluid 33 between the inlet port 28 and the outlet port 30 in those situations where a continuous, regulated flow of pressurized fluid 33 is required. These operations will be more fully explained below.

A portion of the pressurized fluid 33 that is discharged through the fill valve 54 and then through the fill valve discharge passage 64 is directed via an exhaust valve pressurization passage 72 created in a connecting wall 74 of central body portion 22 into an exhaust valve pressurization chamber 76. When the fill valve 54 is open and the dump valve 56 is closed, the pressurized fluid 33 received in the exhaust valve pressurization chamber 76 via the exhaust valve pressurization passage 72 applies a second force F2 (Figure 2B) against an exhaust valve end face 78 of an exhaust poppet valve 80 to retain the exhaust poppet valve 80 in a seated position.

The exhaust poppet valve 80 is slidably disposed in an exhaust valve cavity 82 that is defined within the body 12. The exhaust poppet valve 80 includes an exhaust poppet seat engagement member 83, which contacts an exhaust valve seat 84 in the closed position of exhaust poppet valve 80 (shown in Figure 1). When exhaust poppet valve 80 is in the closed position, the pressurized fluid 33 flowing from outlet flow passage 34 through outlet port 30 also enters an exhaust/outlet common passage 86. In the closed position, the exhaust poppet valve 80 is isolated from the exhaust port 32 to prevent the pressurized fluid 33 - from flowing out of exhaust port 32 through an exhaust flow passage 88. Accordingly, the pressurized fluid 33 in the exhaust/outlet common passage 86 applies a third force F3 (Figure 2B) on the exhaust poppet valve 80 that generally opposes the second force F2 that the pressurized fluid 33 in the exhaust valve pressurization chamber 76 applies to the exhaust valve end face 78 of the exhaust poppet valve 80. The exhaust valve cavity 82 is positioned between and fluidly connects the exhaust/outlet common passage 86 and the exhaust flow passage 88.

The exhaust poppet valve 80 includes an integrally connected, axially extending exhaust valve stem 90, which is slidingly received in a stem receiving passage 92 of a stem receiving member 94. The stem receiving member 94 is positioned between a second boundary wall 96 and the first end cap 14. Similar to the first boundary wall 45, the pressurized fluid 33 can free-flow through second boundary wall 96 via at least one hole 97. A size and quantity of the hole(s) 97 controls the speed at which pressure balances across second boundary wall 96.

A dump valve passage 98 is provided at a discharge side of the dump valve 56, which communicates with the exhaust flow passage 88 via a dump valve exhaust port 100 in the central body portion 22. The dump valve exhaust port 100 is open to the exhaust flow passage 88 and therefore operates to expel the pressurized fluid 33 in the fill valve discharge passage 64 into the exhaust flow passage 88 when the dump valve 56 is actuated. It is noted that dump valve outlet passage 98 is isolated from the exhaust valve pressurization passage 72, the fill valve discharge passage 64, and piston pressurization passage 66 when the dump valve 56 is closed. It is further noted that each of the valve discharge passage 64, the piston pressurization passage 66, the exhaust valve pressurization passage 72, and the dump valve passage 98 are isolated from the pressurized fluid 33 in the outlet flow passage 34 and exhaust/outlet common passage 86 when the fill valve 54 is open. These flow passages therefore allow communication of the filtered, pressurized fluid 33 from the inlet port 28 to be communicated through the fill valve 54 and the dump valve 56 without exposing the fill valve 54 and the dump valve 56 to potentially contaminated fluid lingering around the outlet port 30.

The proportional pressure controller 10 can further include a circuit board 101 positioned inside or outside the controller operator 20, which is in electrical communication with both the fill and dump valves 54, 56. Signals received at the circuit board 101 for positioning control of either the fill or dump valves 54, 56 are received via a wiring harness 102, which may extend through the controller operator 20 and be sealed using a connecting plug 104. A control system 106, which may be external to the controller operator 20, performs calculation functions and forwards command signals to the circuit board 101. The circuit board 101 then controls either/both fill and/or dump valves 54, 56 to control fluid pressure at the outlet port 30. Control signals from and to the proportional pressure controller 10 and the control system 106 are communicated using a control signal interface 108. The control signal interface 108 can be a hard wire (e.g.: wiring harness) connection, a wireless (e.g.: radio frequency or infra-red) connection, or the like. Optionally, the control system 106 may be electrically connected to one or more pressure signaling devices 109a, 109b via the control signal interface 108. Although the one or more pressure signaling devices 109a, 109b may be located at various locations in the proportional pressure controller 10, Figure 1 illustrates a first pressure signaling device 109a that is positioned in the fill valve discharge passage 64 and a second pressure signaling device 109b that is position in the outlet flow passage 34. In operation, the first and second pressure signaling devices 109a, 109b respectively measure the fluid pressure within the fill valve discharge passage 64 and the outlet flow passage 34 and generate first and second pressure signals that correspond to the measured fluid pressure. The first and second pressure signaling devices 109a, 109b output the first and second pressure signals to the control system 106, which controls actuation of the fill valve 54 and the dump valve 56 in response to the first and second pressure signals.

It should be appreciated that failing to achieve the desired fluid pressure at the outlet port 30 of the proportional pressure controller 10 can result in rapid opening/closing operation of the fill and dump valves 54, 56 and the inlet poppet and exhaust poppet valves 36, 80. This condition, which is known as "motor boating", occurs as the proportional pressure controller 10 attempts to correct to the desired fluid pressure at the outlet port 30. Use of the first and second pressure signaling devices 109a, 109b can provide a differential pressure measurement between the fluid pressure in the fill valve discharge passage 64, which is sensed by first pressure signaling device 109a, and the fluid pressure in the outlet flow passage 34, which is sensed by second pressure signaling device 109b. Together with fast acting inlet poppet and exhaust poppet valves 35, 38 (which respond to pressure differences and do not require a control signal), the proportional pressure controller 10 can help mitigate the chance of motor boating.

Still referring to Figure 1, the proportional pressure controller 10 further includes an isolation valve assembly 110. The isolation valve assembly 110 generally comprises an isolation valve cavity 112 and an isolation valve member 114 that is slidably disposed in the isolation valve cavity 112. The isolation valve cavity 112 is defined by a cavity wall 116 and has a first end 118 and a second end 120 that is arranged opposite the first end 118. The isolation valve member 114 is moveable within the isolation valve cavity 112 between an isolation valve closed position (Figure 2A) and a isolation valve open position (Figure 2B). The isolation valve assembly 110 includes a first isolation valve piston 122 and a second isolation valve piston 124. The first isolation valve piston 122 is positioned along the isolation valve member 114 such that the first isolation valve piston 122 is slidably disposed within the first end 118 of the isolation valve cavity 112. The second isolation valve piston 124 is positioned along the isolation valve member 114 such that the second isolation valve piston 124 is arranged opposite the first isolation valve piston 122 and is slidably disposed within the second end 120 of the isolation valve cavity 112. Both the first isolation valve piston 122 and the second isolation valve piston 124 seal against the cavity wall 116 of the isolation valve cavity 112. The isolation valve assembly 110 also includes one or more isolation valve pressurization chambers 126a, 126b. In Figure 1, one of the isolation valve pressurization chambers 126a is open to the first end 118 of the isolation valve cavity 112 while the other isolation valve pressurization chamber 126b is open to the second end 120 of the isolation valve cavity 112. As will be explained in greater detail below, fluid pressure within the isolation valve pressurization chambers 126a, 126b controls the movement and position of the isolation valve member 114 within and relative to the isolation valve cavity 112.

The isolation valve assembly 110 further comprises a first seat member 128 and a second seat member 130. The first and second seat members 128, 130 are disposed along the cavity wall 116 of the isolation valve cavity 112 and are arranged such that the second seat member 130 is longitudinally spaced from the first seat member 128. The isolation valve assembly 110 has an intake port 132, a first discharge port 134, and a second discharge port 136. The intake port 132 is open to the isolation valve cavity 112 and receives an incoming flow of the pressurized fluid 33 during operation of the isolation valve assembly 110. The first discharge port 134 is open to the isolation valve cavity 112 and is positioned longitudinally between the first seat member 128 and the second seat member 130. The second discharge port 136 is also open to the isolation valve cavity 112. The intake port 132 and the second discharge port 136 are positioned longitudinally on opposite sides of the first discharge port 134. In other words, the first discharge port 134 is positioned longitudinally between the intake port 132 and the second discharge port 136.

The isolation valve assembly 110 also includes a first seat engagement member 138 and the second seat engagement member 140. The first and second seat engagement members 138, 140 extend outwardly from the isolation valve member 114 at longitudinally spaced locations. Although other configurations are possible, where the isolation valve cavity 112 is a cylindrical bore (as shown in Figure 1), the first and second seat engagement members 138, 140 extend radially outward from and annularly about the isolation valve member 114. The first seat engagement member 138 is positioned longitudinally between the first isolation valve piston 122 and the second isolation valve piston 124. The second seat engagement member 140 is positioned longitudinally between the first seat engagement member 138 and the second isolation valve piston 124. It should be appreciated that the first and second seat engagement members 138, 140 and the first and second isolation valve pistons 122, 124 may be integrally formed with the isolation valve member 114 or may be separately formed components that are connected to and carried on the isolation valve member 114. It should also being appreciated that the isolation valve member 114, the first and second isolation valve pistons 122, 124, and the first and second seat engagement members 138, 140 have transverse cross-sections. Where the isolation valve cavity 112 is a cylindrical bore, the transverse cross-sections of the isolation valve member 114, the first and second isolation valve pistons 122, 124, and the first and second seat engagement members 138, 140 may be circular in shape. Generally speaking, the transverse cross-section of the isolation valve member 114 is smaller than the transverse cross-sections of the first and second isolation valve pistons 122, 124 and transverse cross-sections of the first and second seat engagement members 138, 140. The transverse cross-sections of the first and second isolation valve pistons 122, 124 may or may not be equal in size to one another and may or may not be equal in size to the transverse cross-sections of the first and second seat engagement members 138, 140. Likewise, the transverse cross-sections of the first and second seat engagement members 138, 140 may or may not be equal in size to one another.

The proportional pressure controller 10 further includes an actuator 142 for controlling the movement of the isolation valve member 114 between the isolation valve closed position and the isolation valve open position. The actuator 142 may take several forms. In accordance with one exemplary configuration, the actuator 142 includes an actuator valve 144 and an actuator valve passage 146. The actuator valve 144 is arranged in fluid communication with the isolation valve pressurization chambers 126a, 126b. The actuator valve 144 may also electrically connected to the control system 106 via the control signal interface 108. Therefore, the control system 106 may also control actuation of the actuator valve 144 in response to the first and second pressure signals that the control system 106 receives from the first and second pressure signaling devices. 109a, 109b. In operation, the actuator valve 144 receives pressurized fluid 33 from the inlet flow passage 58 and selectively pressurizes the isolation valve pressurization chambers 126a, 126b by selectively supplying the pressurized fluid 33 to the isolation valve pressurization chambers 126a, 126b. The actuator valve passage 146 extends between the actuator valve 144 and the isolation valve pressurization chambers 126a, 126b and is therefore configured to communicate pressurized fluid 33 from the actuator valve 144 to the isolation valve pressurization chambers 126a, 126b.

As will be explained in greater detail below, pressurization of the isolation valve pressurization chambers 126a, 126b by the actuator valve 144 moves the isolation valve member 114 in the isolation valve cavity 112 between the isolation valve open position and the isolation valve closed position. In the isolation valve closed position, the first seat engagement member 138 that is carried on the isolation valve member 114 contacts the first seat member 128 to fluidly isolate the intake port 132 from the first and second discharge ports 134, 136. In the isolation valve closed position, the second seat engagement member 140 that is carried on the isolation valve member 114 is spaced from the second seat member 130 such that any pressurized fluid 33 at the first discharge port 134 can vent (i.e. be discharged) through the second discharge port 136. In the isolation valve open position, the first seat engagement member 138 that is carried on the isolation valve member 114 is displaced away from the first seat member 128 to permit fluid flow from the intake port 132, through the isolation valve cavity 112, and to the first discharge port 134. In the isolation valve open position, the second seat engagement member 140 that is carried on the isolation valve member 114 contacts the second seat member 130 fluidly isolate the second discharge port 136 from the first discharge port 134.

Various configurations of the proportional pressure controller 10 are possible where either the inlet port 28 or the outlet port 30 in the body 12 of the proportional pressure controller 10 is arranged in fluid communication with either the intake port 132 or the first discharge port 134 of the isolation valve assembly 110. Moreover, the isolation valve assembly 110 can either be located within (i.e. inside of) or external to (i.e. outside of) the body 12 of the proportional pressure controller 10. In the example shown in Figure 1, the first discharge port 134 of the isolation valve assembly 110 is arranged in fluid communication with the inlet port 28 in the body 12 of the proportional pressure controller 10. In addition, the isolation valve assembly 110 is arranged external to the body 12 of the proportional pressure controller 10. In accordance with this configuration, the isolation valve assembly 110 is used to selectively supply the pressurized fluid 33 to the inlet flow passage 58 in the body 12 of the proportional pressure controller 10 through the inlet port 28. Other alternative configurations will be discussed in greater detail below.

Referring to Figures 2A-2C, operation of the proportional pressure controller 10 of Figure 1 is illustrated. In Figure 2A, pressurized fluid 33 has been supplied to the intake port 132 of the isolation valve assembly 110. The isolation valve assembly 110 is isolating the pressurized fluid 33 in the intake port 132 from the inlet port 28 and thus the inlet flow passage 58 of the proportional pressure controller 10. Accordingly, the fluid pressure at the outlet port 30 of the proportional pressure controller 10 is zero in Figure 2A. In Figure 2A, the actuator valve 144 has supplied the second isolation valve pressurization chamber 126b with pressurized fluid 33. The pressurized fluid 33 in the second isolation valve pressurization chamber 126b applies a fourth force F4 to the second isolation valve piston 124, which displaces the isolation valve member 114 to the isolation valve closed position. In the isolation valve closed position, the first seat engagement member 138 contacts the first seat member 128 such that the pressurized fluid 33 in the intake port 132 cannot flow to the first or second discharge ports 134, 136. Meanwhile, in the isolation valve closed position, the second seat engagement member 140 is spaced from the second seat member 130 such that any fluid that is present at the first discharge port 134 (i.e. any fluid in the inlet port 28 and the inlet flow passage 58) may be exhausted/expelled through the second discharge port 136.

In Figure 2B, the pressurized fluid 33 that has been supplied to the intake port 132 of the isolation valve assembly 110 is allowed to flow through the isolation valve assembly 110, through the inlet port 28 in the body 12 of the proportional pressure controller 10, and into the inlet flow passage 58. In Figure 2B, the actuator valve 144 has supplied the first isolation valve pressurization chamber 126a with pressurized fluid 33. The pressurized fluid 33 in the first isolation valve pressurization chamber 126a applies a fifth force F5 to the first isolation valve piston 122, which displaces the isolation valve member 114 to the isolation valve open position. In the isolation valve open position, the first seat engagement member 138 is spaced from the first seat member 128 such that the pressurized fluid 33 in the intake port 132 can flow to the first discharge port 134. Meanwhile, in the isolation valve open position, the second seat engagement member 140 contacts the second seat member 130 such that the pressurized fluid 33 that is supplied to the first discharge port 134 by the intake port 132 cannot flow to the second discharge port 136.

As shown in Figure 2B, the pressurized fluid 33 in the inlet flow passage 58 also flows into the fluid supply port 60 and the fill inlet passage 62. The control system 106 sends a signal to open fill valve 54, with dump valve 56 being retained in a closed position. When fill valve 54 opens, a portion of the pressurized fluid 33 in the inlet port 28 flows through the fill valve 54 and into the fill valve discharge passage 64. The fluid pressure in the fill valve discharge passage 64 is sensed by the first pressure signaling device 109a, which according to several embodiments can be a pressure transducer. The pressurized fluid 33 in fill valve discharge passage 64 is directed, in part, through the piston pressurization passage 66 and into the piston pressurization chamber 68. The pressurized fluid 33 in the piston pressurization chamber 68 applies the first force F1 to the piston 44, which causes the piston 44 to slide in the inlet valve opening direction "B". The piston 44 acts against the inlet valve stem 43 to push the inlet poppet valve 36 away from the inlet valve seat 38, compressing the biasing member 40. This opening motion of inlet poppet valve 36 allows the pressurized fluid 33 in the inlet flow passage 58 to flow through the inlet valve cavity 42 and into outlet flow passage 34, and from there, to the outlet port 30. The pressurized fluid which exits the outlet port 30 can be directed to a pressure controlled device (not shown) such as a piston operator or similar actuating device.

The first boundary wall 45 can also function as a contact surface stopping the sliding motion of the piston 44 in the inlet valve opening direction "B". A length of time that the inlet poppet valve 36 is open can be used together with the pressure sensed by the first pressure signaling device 109a to proportionally control the fluid pressure at the outlet port 30. Because the first pressure signaling device 109a is positioned within the fill valve discharge passage 64, the first pressure signaling device 109a is isolated form potential contaminants that may be present in outlet port 30. This reduces the possibility of contaminants affecting the pressure signal of first pressure signaling device 109a. As previously noted, when the pressurized fluid 33 is being discharged through the outlet port 30 and when the fill valve 54 is in the open position, some of the pressurized fluid 33 in the fill valve discharge passage 64 passes through the exhaust valve pressurization passage 72 and into the exhaust valve pressurization chamber 76. The pressurized fluid 33 in the exhaust valve pressurization chamber 76 applies the second force F2 to the exhaust valve end face 78 to retain the exhaust poppet valve 80 in the closed position by forcing the exhaust poppet valve 80 in the exhaust valve closing direction "C". As the pressurized fluid 33 flows through the outlet port 30, some of the pressurized fluid 33 flows into the exhaust/outlet common passage 86. The pressurized fluid 33 in the exhaust/outlet common passage 86 applies the third force F3 to the exhaust poppet valve 80. The third force F3 that is applied to the exhaust poppet valve 80 generally opposes the second force F2. Accordingly, in Figure 2B, the second force F2 is greater than the third force F3 such that the exhaust poppet valve 80 remains closed.

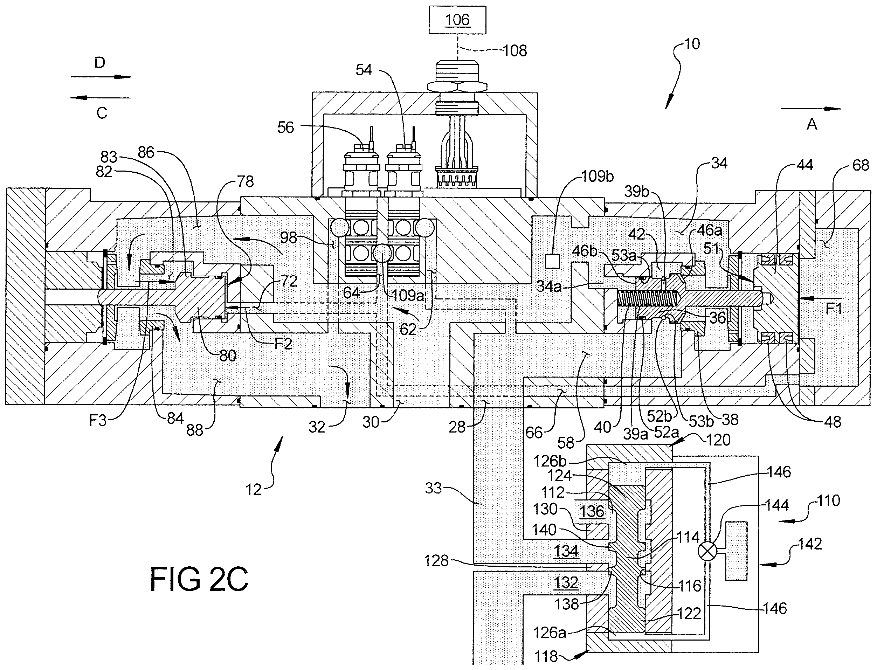

Referring to Figure 2C, when a desired pressure is reached in the outlet flow passage 34, as sensed by second pressure signaling device 109b, the fill valve 54 is directed to close. If the desired pressure is exceeded, the dump valve 56 is directed to open. The dump valve 56 will also be directed to open if a command signal is generated by the control system 106 to lower the fluid pressure in the outlet flow passage 34. When the fill valve 54 is closed, the pressurized fluid 33 in the fill inlet passage 62 is isolated from the fill valve discharge passage 64. When the dump valve 56 opens, the exhaust valve pressurization passage 72 vents to the exhaust flow passage 88 via the fill valve discharge passage 64 and the dump valve outlet passage 98. The residual fluid pressure at the outlet port 30 and the exhaust/outlet common passage 86 therefore exceeds the fluid pressure in the exhaust valve pressurization passage 72, forcing exhaust poppet valve 80 to translate in the exhaust valve opening direction "D". In other words, in Figure 2C, the second force F2 that is applied to the exhaust valve end face 78 of the exhaust poppet valve 80 by the pressurized fluid 33 in the exhaust valve pressurization chamber 76 is less than the third force F3 that is applied to the exhaust poppet valve 80 by the pressurized fluid 33 in the exhaust/outlet common passage 86. At the same time, the pressurized fluid 33 in the piston pressurization passage 66 vents to the exhaust flow passage 88 via the fill valve discharge passage 64 and the dump valve outlet passage 98. This reduces the first force F1 acting on the piston 44 and thus the inlet poppet valve 36 such that the biasing force of biasing member 40 returns the inlet poppet valve 36 in the inlet valve closing direction "A" to seat the inlet poppet valve 36 against the inlet valve seat 38. The at least one hole 47 provided through the first boundary wall 45 permits fluid pressure equalization across the first boundary wall 45 increasing the sliding speed of the piston 44 when the inlet poppet valve 36 closes.

As the exhaust poppet valve 80 moves in the exhaust valve opening direction "D", the exhaust poppet seat engagement member 83 moves away from the exhaust valve seat 84 allowing the pressurized fluid 33 to flow from the exhaust/outlet common passage 86, through the exhaust valve cavity 82, into the exhaust flow passage 88, and exiting via the exhaust port 32. When the dump valve 56 receives a signal from the control system 106 to close as the fluid pressure at the fill valve discharge passage 64, which is sensed by first pressure signaling device 109a, reaches the desired pressure, the exhaust poppet valve 80 will remain in the open position until the fluid pressure in the exhaust valve pressurization chamber 76 exceeds the fluid pressure in the exhaust/outlet common passage 86. When this occurs, fluid pressure in the exhaust valve pressurization passage 72 forces the exhaust poppet valve 80 in the exhaust valve closed direction "C" against the exhaust valve seat 84.

If a zero pressure condition at the outlet 30 is desired, the actuator valve 144 of the isolation valve assembly 110 supplies the second isolation valve pressurization chamber 126b with pressurized fluid 33. The pressurized fluid 33 in the second isolation valve pressurization chamber 126b applies the fourth force F4 to the second isolation valve piston 124, which returns the isolation valve member 114 to the isolation valve closed position. In the isolation valve closed position, the first seat engagement member 138 contacts the first seat member 128 such that the pressurized fluid 33 in the intake port 132 cannot flow to the first or second discharge ports 134, 136. Meanwhile, in the isolation valve closed position, the second seat engagement member 138 is spaced from the second seat member 130 such that any fluid that is present at the first discharge port 134 (i.e. any fluid in the inlet port 28 and the inlet flow passage 58) may be exhausted/expelled through the second discharge port 136. By cutting off flow of the pressurized fluid 33 to the inlet port 28, the residual pressurized fluid 33 in the outlet flow passage 34, the exhaust/outlet common passage 86, the fill valve discharge passage 64, the piston pressurization passage 66, the piston pressurization chamber 68, the exhaust valve pressurization passage 72, and the exhaust valve pressurization chamber 76 will be exhausted through the exhaust flow passage 88 and the exhaust port 32. This returns the proportional pressure controller 10 to the condition illustrated in Figure 2A.

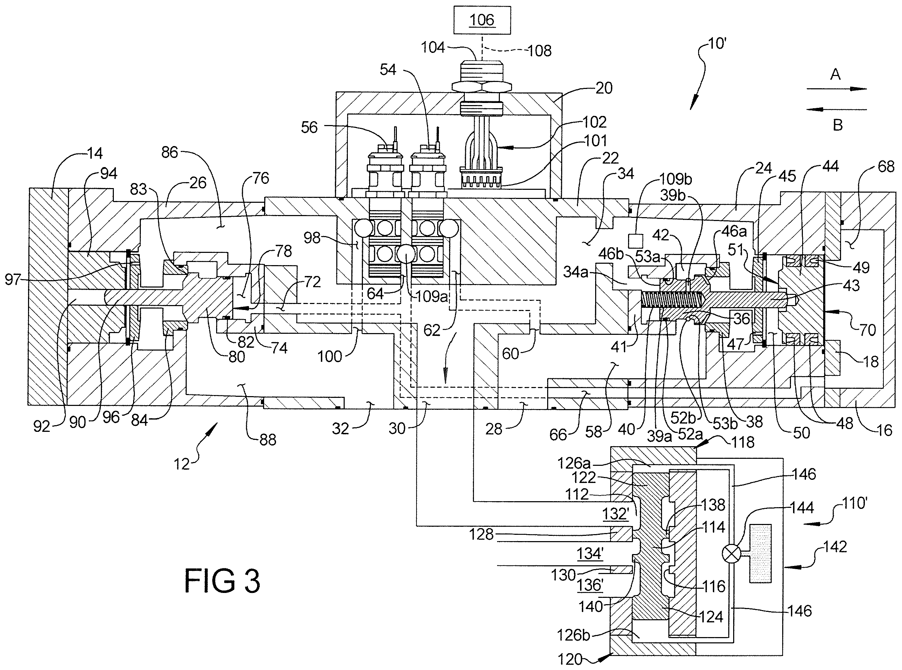

With reference to Figure 3, another proportional pressure controller 10' which does not fall within the scope of the present invention is shown for the purposes of illustration and where the intake port 132' of the isolation valve assembly 110' is arranged in fluid communication with the outlet port 30 in the body 12. In addition to this change, the entire isolation valve assembly 110' has been flipped vertically (i.e. rotated 180 degrees about an axis running co-axially through the first discharge port 134 shown in Figure 1). In accordance with this configuration, the intake port 132' of the isolation valve assembly 110' receives the pressurized fluid exiting the outlet flow passage 34 and the exhaust/outlet common passage 86 through the outlet port 30 and the first discharge port 134 supplies the pressurized fluid 33 to the pressure controlled device (not shown). The remaining structure of the proportional pressure controller 10' is substantially the same as that described with reference to the proportional pressure controller 10 of Figure 1. Like in Figure 1, the isolation valve assembly 110' illustrated in Figure 3 is external to the body 12 of the proportional pressure controller 10'.

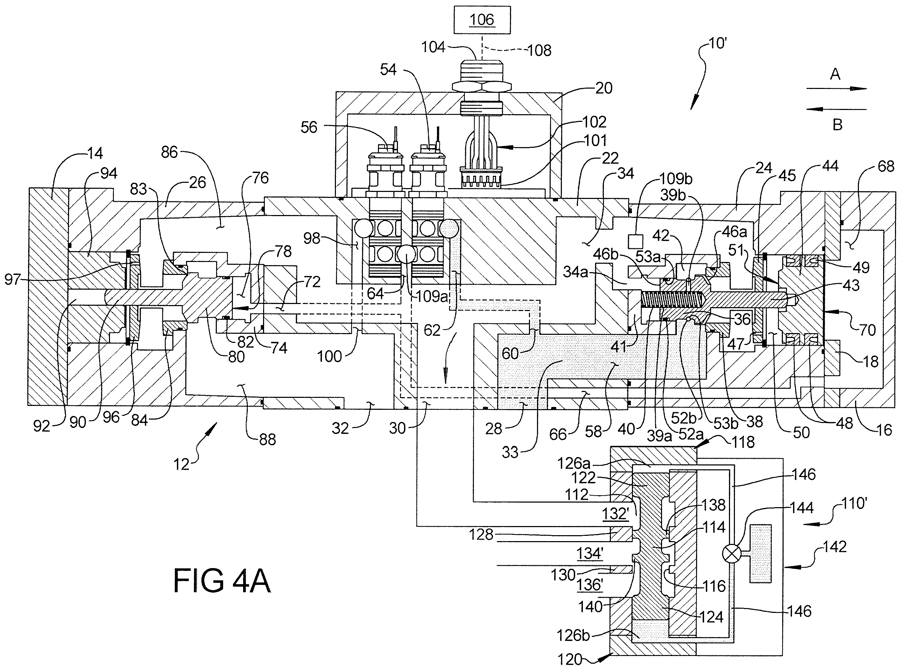

Referring to Figures 4A-4C, operation of the proportional pressure controller 10' of Figure 3 is illustrated. In Figure 4A, pressurized fluid 33 has been supplied directly to the inlet port 28 and thus the inlet flow passage 58 of the proportional pressure controller 10'. The inlet poppet engagement member 46a of the inlet poppet valve 36 is held against the inlet valve seat 38 by the biasing member 40, which acts against the inlet poppet valve 36 in the inlet poppet valve closing direction "A". In Figure 4A, the actuator valve 144' has supplied the second isolation valve pressurization chamber 126b with pressurized fluid 33. The pressurized fluid 33 in the second isolation valve pressurization chamber 126b applies the fourth force F4 to the second isolation valve piston 124, which displaces the isolation valve member 114 to the isolation valve closed position. In the isolation valve closed position, the first seat engagement member 138 contacts the first seat member 128 such that any of the residual fluid 33 in the outlet port 30 of the body 12 cannot flow from the intake port 132' of the isolation valve assembly 110' to the first or second discharge ports 134', 136'. Meanwhile, in the isolation valve closed position, the second seat engagement member 140 is spaced from the second seat member 130 such that any fluid that is present at the first discharge port 134' (i.e. any fluid in the pressure controlled device) may be exhausted/expelled through the second discharge port 136'. In this way, a zero pressure condition is provided at the first and second discharge ports 134', 136' of the isolation valve assembly 110'.

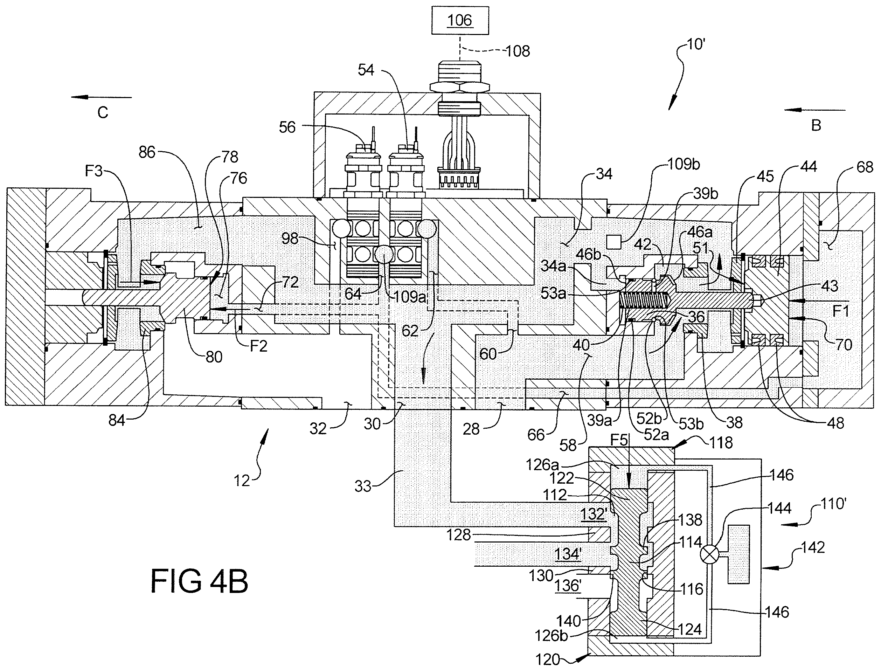

As shown in Figure 4B, the pressurized fluid 33 in the inlet flow passage 58 flows into the fluid supply port 60 and the fill inlet passage 62. The control system 106 sends a signal to open fill valve 54, with dump valve 56 being retained in a closed position. When fill valve 54 opens, a portion of the pressurized fluid 33 in the inlet port 28 flows through the fill valve 54 and into the fill valve discharge passage 64. The fluid pressure in fill valve discharge passage 64 is sensed by the first pressure signaling device 109a. The pressurized fluid 33 in fill valve discharge passage 64 is directed, in part, through the piston pressurization passage 66 and into the piston pressurization chamber 68. The pressurized fluid 33 in the piston pressurization chamber 68 applies the first force F1 to the piston 44, which causes the piston 44 to slide in the inlet valve opening direction "B". The piston 44 acts against the inlet valve stem 43 to push the inlet poppet valve 36 away from the inlet valve seat 38, compressing the biasing member 40. This opening motion of inlet poppet valve 36 allows the pressurized fluid 33 in the inlet flow passage 58 to flow through the inlet valve cavity 42 and into outlet flow passage 34, and from there, to the outlet port 30. In addition, some of the pressurized fluid 33 in the fill valve discharge passage 64 passes through the exhaust valve pressurization passage 72 and into the exhaust valve pressurization chamber 76. The pressurized fluid 33 in the exhaust valve pressurization chamber 76 applies the second force F2 to the exhaust valve end face 78 to retain the exhaust poppet valve 80 in the closed position by forcing the exhaust poppet valve 80 in the exhaust valve closing direction "C". As the pressurized fluid 33 flows through the outlet port 30, some of the pressurized fluid 33 flows into the exhaust/outlet common passage 86. The pressurized fluid 33 in the exhaust/outlet common passage 86 applies the third force F3 to the exhaust poppet valve 80. The third force F3 that is applied to the exhaust poppet valve 80 generally opposes the second force F2. Accordingly, in Figure 4B, the second force F2 is greater than the third force F3 such that the exhaust poppet valve 80 remains closed.

In Figure 4B, the actuator valve 144' has supplied the first isolation valve pressurization chamber 126a with pressurized fluid 33. The pressurized fluid 33 in the first isolation valve pressurization chamber 126a applies the fifth force F5 to the first isolation valve piston 122, which displaces the isolation valve member 114 to the isolation valve open position. In the isolation valve open position, the first seat engagement member 138 is spaced from the first seat member 128 such that the pressurized fluid 33 in the intake port 132' can flow to the first discharge port 134'. Meanwhile, in the isolation valve open position, the second seat engagement member 140 contacts the second seat member 130 such that the pressurized fluid 33 that is supplied to the first discharge port 134' by the intake port 132' cannot flow to the second discharge port 136'. Accordingly, in the isolation valve open position, the isolation valve assembly 110' permits the pressurized fluid 33 to exit the outlet port 30, pass through the isolation valve cavity 112, and flow to the pressure controlled device (not shown) via the first discharge port 134'.

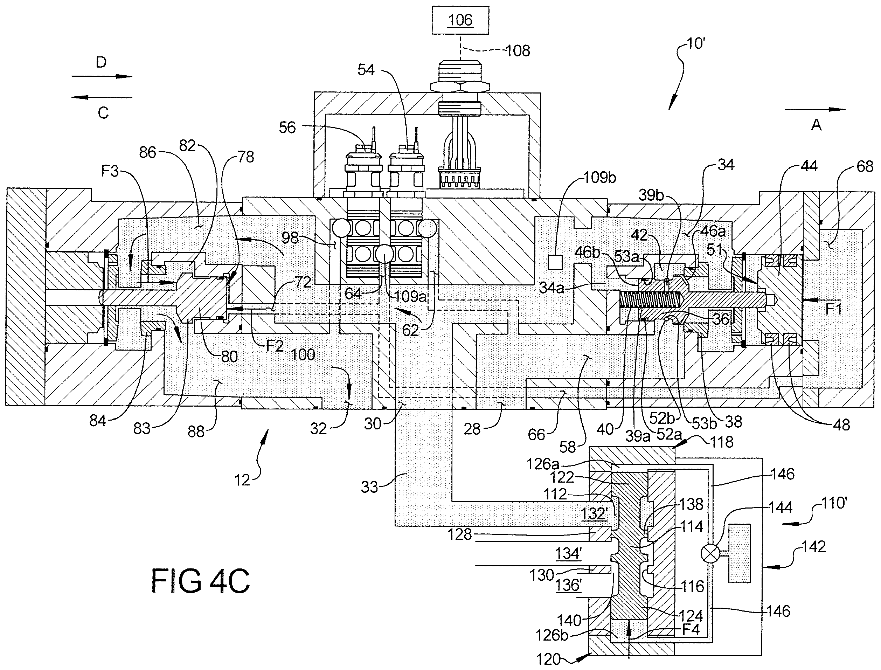

Referring to Figure 4C, when a desired pressure is reached in the outlet flow passage 34, as sensed by second pressure signaling device 109b, the fill valve 54 is directed to close. If the desired pressure is exceeded, the dump valve 56 is directed to open. The dump valve 56 will also be directed to open if a command signal is generated by the control system 106 to lower the fluid pressure in the outlet flow passage 34. When the fill valve 54 is closed, the pressurized fluid 33 in the fill inlet passage 62 is isolated from the fill valve discharge passage 64. When the dump valve 56 opens, the exhaust valve pressurization passage 72 vents to the exhaust flow passage 88 via the fill valve discharge passage 64 and the dump valve outlet passage 98. The residual fluid pressure at the outlet port 30 and the exhaust/outlet common passage 86 therefore exceeds the fluid pressure in the exhaust valve pressurization passage 72, forcing exhaust poppet valve 80 to translate in the exhaust valve opening direction "D". In other words, in Figure 4C, the second force F2 that is applied to the exhaust valve end face 78 of the exhaust poppet valve 80 by the pressurized fluid 33 in the exhaust valve pressurization chamber 76 is less than the third force F3 that is applied to the exhaust poppet valve 80 by the pressurized fluid 33 in the exhaust/outlet common passage 86. At the same time, the pressurized fluid 33 in the piston pressurization passage 66 vents to the exhaust flow passage 88 via the fill valve discharge passage 64 and the dump valve outlet passage 98. This reduces the first force F1 acting on the piston 44 and thus the inlet poppet valve 36 such that the biasing force of biasing member 40 returns the inlet poppet valve 36 in the inlet valve closing direction "A" to seat the inlet poppet valve 36 against the inlet valve seat 38.

As the exhaust poppet valve 80 moves in the exhaust valve opening direction "D", the exhaust poppet seat engagement member 83 moves away from the exhaust valve seat 84 allowing the pressurized fluid 33 to flow from the exhaust/outlet common passage 86, through the exhaust valve cavity 82, into the exhaust flow passage 88, and exiting via the exhaust port 32. When the dump valve 56 receives a signal from the control system 106 to close as the fluid pressure at the fill valve discharge passage 64, which is sensed by first pressure signaling device 109a, reaches the desired pressure, the exhaust poppet valve 80 will remain in the open position until the fluid pressure in the exhaust valve pressurization chamber 76 exceeds the fluid pressure in the exhaust/outlet common passage 86. When this occurs, fluid pressure in the exhaust valve pressurization passage 72 forces the exhaust poppet valve 80 in the exhaust valve closed direction "C" against the exhaust valve seat 84.

If a zero pressure condition at the first discharge port 134' is desired (i.e. the pressure supplied to the pressure controlled device), the actuator valve 144' of the isolation valve assembly 110' supplies the second isolation valve pressurization chamber 126b with pressurized fluid 33. The pressurized fluid 33 in the second isolation valve pressurization chamber 126b applies the fourth force F4 to the second isolation valve piston 124, which returns the isolation valve member 114 to the isolation valve closed position. In the isolation valve closed position, the first seat engagement member 138 contacts the first seat member 128 such that the pressurized fluid 33 in the intake port 132' cannot flow to the first or second discharge ports 134', 136'. Meanwhile, in the isolation valve closed position, the second seat engagement member 138 is spaced from the second seat member 130 such that any fluid that is present at the first discharge port 134' (i.e. any fluid in the pressure controlled device) may be exhausted/expelled through the second discharge port 136'. By isolating the first discharge port 134' from the outlet port 30 and the residual pressurized fluid 33 in the outlet flow passage 34, the isolation valve assembly 110' creates a zero pressure condition at the first discharge port 134', which is connected in fluid communication with the pressure controlled device (not shown).

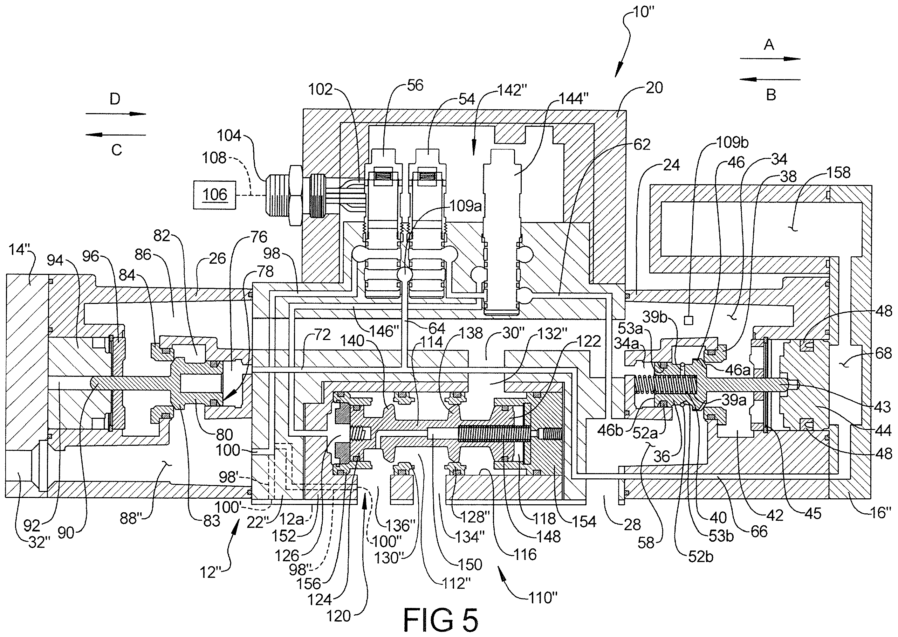

With reference to Figure 5, a proportional pressure controller 10" according to the present invention is shown where the intake port 132" of the isolation valve assembly 110 is arranged in fluid communication with and directly adjacent to the outlet port 30" in the body 12". In addition to this change, the isolation valve assembly 110" has been arranged within the body 12" creating a more compact proportional pressure controller 10". In accordance with this configuration, the intake port 132" of the isolation valve assembly 110" receives the pressurized fluid 33 exiting the outlet flow passage 34 and the exhaust/outlet common passage 86 through the outlet port 30". The actuator valve 144" of the actuator 142" has also been moved from a position external to the body 12" to a position that is within the body 12" and the controller operator 20 of the proportional pressure controller 10". The actuator valve 144" is disposed in fluid communication with the fill inlet passage 62 and only one isolation valve pressure chamber 126 in this configuration by way of the actuator valve passage 146". The isolation valve pressure chamber 126 is open to the second end 120 of the isolation valve cavity 112". The other isolation valve pressure chamber at the first end 118 of the isolation valve cavity 112" has been replaced by a isolation valve biasing member 148. By way of example and without limitation, the isolation valve biasing member 148 may be a coil spring. To prevent a vacuum from forming in the first end 118 of the isolation valve cavity 112", the isolation valve member 114" may optionality include a vent passageway 150 that extends through the isolation valve member 114" such that the first end 118 of the isolation valve cavity 112" remains in constant fluid communication with the second discharge port 136".

In Figure 5, the isolation valve cavity 112" is defined by an isolation valve cartridge 152, which is received in the central body portion 22" of the proportional pressure controller 10". The first and second seat members 128", 130" may be integral with the isolation valve cartridge 152 or may be separately formed components. As shown in Figure 5, where the first and second seat members 128", 130" are separately formed components, the first and second seat members 128", 130" may have seals that seal against the isolation valve cartridge 152. Similarly, the first and second isolation valve pistons 122, 124 may seal against the isolation valve cartridge 152 or may seal against first and second isolation valve end caps 154, 156. As shown in Figure 5, where the first and second isolation valve pistons 122, 124 seal against the first and second isolation valve end caps 154, 156, the first isolation valve end cap 154 is positioned in the first end 118 of the isolation valve cavity 112" between the isolation valve cartridge 152 and the first isolation valve piston 122 while the second isolation valve end cap 156 is positioned in the second end 120 of the isolation valve cavity 112" between the isolation valve cartridge 152 and the second isolation valve piston 124. The first and second isolation valve end caps 154, 156 may also have seals that seal the first and second isolation valve end caps 154, 156 to the isolation valve cartridge 152. The shape of the exhaust flow passage 88" in Figure 5 has been modified such that the exhaust port 32" now exits through the first end cap 14" of the proportional pressure controller 10". Finally, the second end cap 16" of the proportional pressure controller 10" has been modified to include an accumulator cavity 158 that is disposed in fluid communication with the piston pressurization chamber 68. As such, the accumulator cavity 158 receives pressurized fluid 33 from the piston pressurization chamber 68 when the fill valve 54 is open. The remaining structure of the proportional pressure controller 10" is substantially the same as that described with reference to the proportional pressure controller 10' of Figure 3.

In accordance with one configuration illustrated in Figure 5, the dump valve passage 98 may extend between the discharge side of the dump valve 56 and the exhaust flow passage 88". In this configuration, the dump valve exhaust port 100 opens directly into the exhaust flow passage 88". When the dump valve 56 is opened, fluid flows through the dump valve passage 98 and is expelled from the dump valve exhaust port 100 into the exhaust flow passage 88". In an alternative configuration, the proportional pressure controller 10" includes a dump valve passage 98' in the body 12" that extends between the dump valve 56 and a dump valve exhaust port 100' that opens to an outer surface 12a of the body 12". When the dump valve 56 is opened, fluid flows through the dump valve passage 98' and is expelled from the body 12" via the dump valve exhaust port 100', which is a standalone port disposed along the outer surface 12a of the body 12". In another alternative configuration, the proportional pressure controller 10" includes a dump valve passage 98" in the body 12" that extends between the dump valve 56 and the second discharge port 136" of the isolation valve assembly 110". In this configuration, the dump valve exhaust port 100" opens directly into the second discharge port 136". When the dump valve 56 is opened, fluid flows through the dump valve passage 98" and is expelled from the dump valve exhaust port 100" into one of the second discharge port 136".

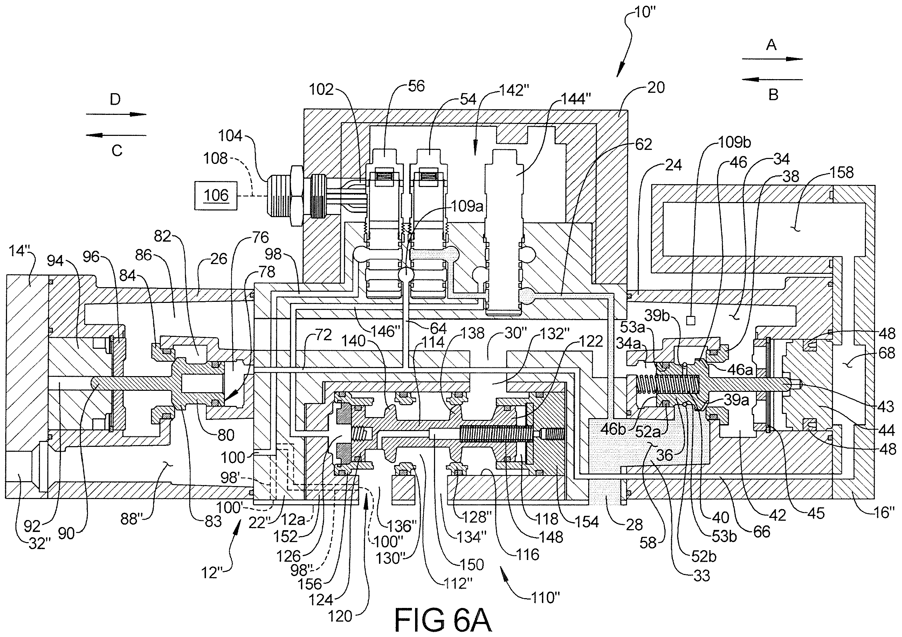

Referring to Figures 6A-6C, operation of the proportional pressure controller 10" of Figure 5 is illustrated. In Figure 6A, pressurized fluid 33 has been supplied directly to the inlet port 28 and thus the inlet flow passage 58 of the proportional pressure controller 10". The inlet poppet engagement member 46a of the inlet poppet valve 36 is held against the inlet valve seat 38 by the biasing member 40, which acts against the inlet poppet valve 36 in the inlet poppet valve closing direction "A". As shown in Figure 6A, the isolation valve member 114" is biased to the isolation valve closed position. More particularly, the isolation valve biasing member 148 applies the fourth force F4 to the first isolation valve piston 122, which pushes the isolation valve member 114" towards the isolation valve closed position. In the isolation valve closed position, the first seat engagement member 138 contacts the first seat member 128" such that any of the residual fluid 33 in the outlet port 30" of the body 12" cannot flow from the intake port 132" of the isolation valve assembly 110" to the first or second discharge ports 134", 136". Meanwhile, in the isolation valve closed position, the second seat engagement member 140 is spaced from the second seat member 130" such that any fluid that is present at the first discharge port 134" (i.e. any fluid in the pressure controlled device) may be exhausted/expelled through the second discharge port 136". In this way, a zero pressure condition is provided at the first and second discharge ports 134", 136" of the isolation valve assembly 110".

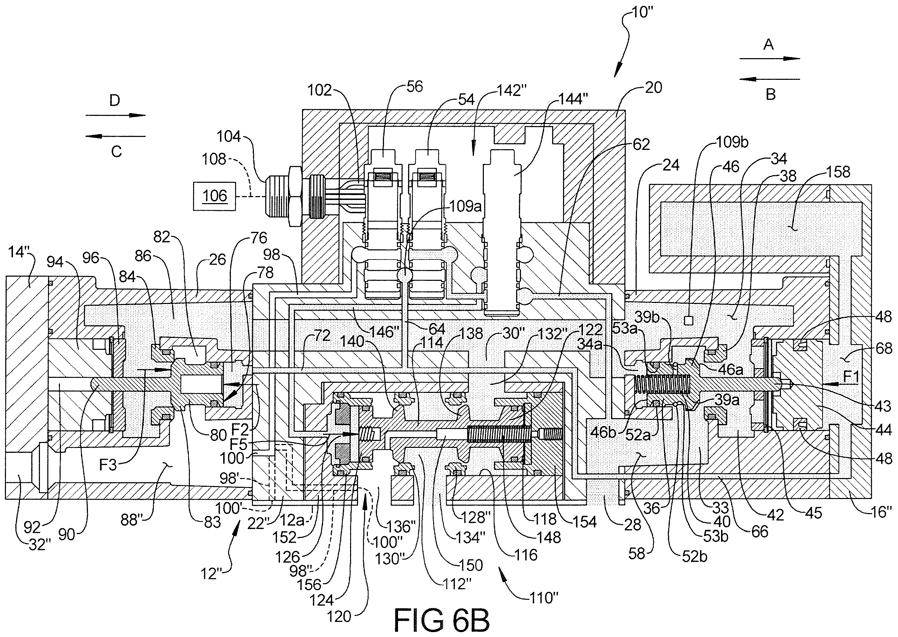

As shown in Figure 6B, the pressurized fluid 33 in the inlet flow passage 58 flows into the fluid supply port 60 and the fill inlet passage 62. The control system 106 sends a signal to open fill valve 54, with dump valve 56 being retained in a closed position. When fill valve 54 opens, a portion of the pressurized fluid 33 in the inlet port 28 flows through the fill valve 54 and into the fill valve discharge passage 64. The fluid pressure in fill valve discharge passage 64 is sensed by the first pressure signaling device 109a. The pressurized fluid 33 in fill valve discharge passage 64 is directed, in part, through the piston pressurization passage 66 and into the piston pressurization chamber 68. The pressurized fluid 33 in the piston pressurization chamber 68 applies the first force F1 to the piston 44, which causes the piston 44 to slide in the inlet valve opening direction "B". The piston 44 acts against the inlet valve stem 43 to push the inlet poppet valve 36 away from the inlet valve seat 38, compressing the biasing member 40. This opening motion of inlet poppet valve 36 allows the pressurized fluid 33 in the inlet flow passage 58 to flow through the inlet valve cavity 42 and into outlet flow passage 34, and from there, to the outlet port 30. In addition, some of the pressurized fluid 33 in the fill valve discharge passage 64 passes through the exhaust valve pressurization passage 72 and into the exhaust valve pressurization chamber 76. The pressurized fluid 33 in the exhaust valve pressurization chamber 76 applies the second force F2 to the exhaust valve end face 78 to retain the exhaust poppet valve 80 in its closed position by forcing the exhaust poppet valve 80 in the exhaust valve closing direction "C". As the pressurized fluid 33 flows through the outlet port 30", some of the pressurized fluid 33 flows into the exhaust/outlet common passage 86. The pressurized fluid 33 in the exhaust/outlet common passage 86 applies the third force F3 to the exhaust poppet valve 80. The third force F3 that is applied to the exhaust poppet valve 80 generally opposes the second force F2. Accordingly, in Figure 6B, the second force F2 is greater than the third force F3 such that the exhaust poppet valve 80 remains closed.

In Figure 6B, the actuator valve 144" has supplied the isolation valve pressurization chamber 126 with pressurized fluid 33. The pressurized fluid 33 in the first isolation valve pressurization chamber 126 applies a fifth force F5 to the second isolation valve piston 124, which displaces the isolation valve member 114" to the isolation valve open position, compressing the isolation valve biasing member 148. In the isolation valve open position, the first seat engagement member 138 is spaced from the first seat member 128" such that the pressurized fluid 33 in the intake port 132" can flow to the first discharge port 134". Meanwhile, in the isolation valve open position, the second seat engagement member 140 contacts the second seat member 130" such that the pressurized fluid 33 that is supplied to the first discharge port 134" by the intake port 132" cannot flow to the second discharge port 136". Accordingly, in the isolation valve open position, the isolation valve assembly 110" permits the pressurized fluid 33 to exit the outlet port 30", pass through the isolation valve cavity 112", and flow to the pressure controlled device (not shown) via the first discharge port 134".

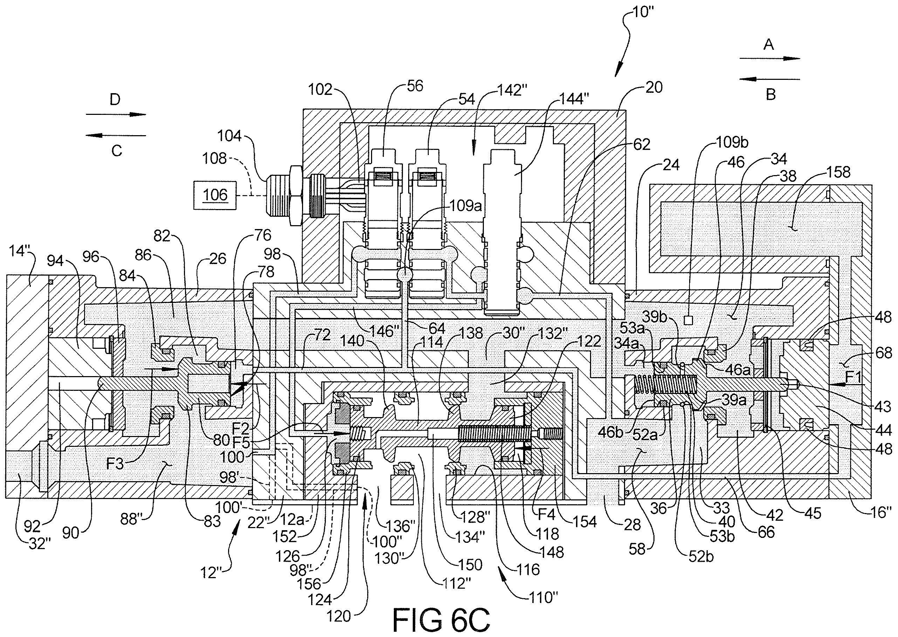

Referring to Figure 6C, when a desired pressure is reached in the outlet flow passage 34, as sensed by second pressure signaling device 109b, the fill valve 54 is directed to close. If the desired pressure is exceeded, the dump valve 56 is directed to open. The dump valve 56 will also be directed to open if a command signal is generated by the control system 106 to lower the fluid pressure in the outlet flow passage 34. When the fill valve 54 is closed, the pressurized fluid 33 in the fill inlet passage 62 is isolated from the fill valve discharge passage 64. When the dump valve 56 opens, the exhaust valve pressurization passage 72 vents to the exhaust flow passage 88" via the fill valve discharge passage 64 and the dump valve outlet passage 98. The residual fluid pressure at the outlet port 30" and the exhaust/outlet common passage 86 therefore exceeds the fluid pressure in the exhaust valve pressurization passage 72, forcing exhaust poppet valve 80 to translate in the exhaust valve opening direction "D". In other words, in Figure 6C, the second force F2 that is applied to the exhaust valve end face 78 of the exhaust poppet valve 80 by the pressurized fluid 33 in the exhaust valve pressurization chamber 76 is less than the third force F3 that is applied to the exhaust poppet valve 80 by the pressurized fluid 33 in the exhaust/outlet common passage 86. At the same time, the pressurized fluid 33 in the piston pressurization passage 66 vents to the exhaust flow passage 88" via the fill valve discharge passage 64 and the dump valve outlet passage 98. This reduces the first force F1 acting on the piston 44 and thus the inlet poppet valve 36 such that the biasing force of biasing member 40 returns the inlet poppet valve 36 in the inlet valve closing direction "A" to seat the inlet poppet valve 36 against the inlet valve seat 38.

As the exhaust poppet valve 80 moves in the exhaust valve opening direction "D", the exhaust poppet seat engagement member 83 moves away from the exhaust valve seat 84 allowing the pressurized fluid 33 to flow from the exhaust/outlet common passage 86, through the exhaust valve cavity 82, into the exhaust flow passage 88", and exiting via the exhaust port 32". When the dump valve 56 receives a signal from the control system 106 to close as the fluid pressure at the fill valve discharge passage 64 reaches the desired pressure, the exhaust poppet valve 80 will remain in the open position until the fluid pressure in the exhaust valve pressurization chamber 76 exceeds the fluid pressure in the exhaust/outlet common passage 86. When this occurs, fluid pressure in the exhaust valve pressurization passage 72 forces the exhaust poppet valve 80 in the exhaust valve closed direction "C" against the exhaust valve seat 84.

If a zero pressure condition at the first discharge port 134" is desired (i.e. the pressure supplied to the pressure controlled device), the actuator valve 144" of the isolation valve assembly 110" releases the pressurized fluid 33 from the isolation valve pressurization chamber 126. This relieves the first force F5 that the pressurized fluid 33 in the isolation valve pressurization chamber 126 was applying to the second isolation valve piston 124. As such, the fourth force F4, which the isolation valve biasing member 148 applies to the first isolation valve piston 122, returns the isolation valve member 114 to the isolation valve closed position. In the isolation valve closed position, the first seat engagement member 138 contacts the first seat member 128" such that the pressurized fluid 33 in the intake port 132" cannot flow to the first or second discharge ports 134", 136". Meanwhile, in the isolation valve closed position, the second seat engagement member 138 is spaced from the second seat member 130" such that any fluid that is present at the first discharge port 134" (i.e. any fluid in the pressure controlled device) may be exhausted/expelled through the second discharge port 136". By isolating the first discharge port 134" from the outlet port 30" and therefore the residual pressurized fluid 33 in the outlet flow passage 34, the isolation valve assembly 110" creates a zero pressure condition at the first discharge port 134", which is connected in fluid communication with the pressure controlled device (not shown).

The configurations shown in the Figures are not intended to be limiting. For example, although the inlet poppet valve 36 and the exhaust valve poppet valve 80 are shown in an opposed configuration, these poppet valves can be arranged in any configuration at the discretion of the manufacturer. Alternate configurations can provide the poppet valves in a side-by-side parallel disposition. The poppet valves can also be oriented such that both poppet valves seat in a same axial direction and unseat in the same opposed axial direction. The configurations shown in the Figures are therefore exemplary of some and not all of the possible configurations available. Similarly, further embodiments of the proportional pressure controller may include different types of valves for the fill valve 54, the dump valve 56, and the actuator valve 144. For example, one or more of the fill valve 54, the dump valve 56, and the actuator valve 144 can be hydraulically operated, solenoid operated, or air operated valves, which can provide different operating characteristics.

Proportional pressure controllers of the present disclosure offer several advantages. By eliminating solenoid actuators associated with the main flow valves of the controller and replacing the valves with poppet valves, small and lower energy consumption pilot valves in the form of fill and dump valves are used to provide pressure actuation to open or close the poppet valves. This reduces the cost and operating power required for the proportional pressure controller. The use of passageways created in the body of the proportional pressure controller to transfer pressurized fluid to actuate the poppet valves (which are isolated from the main poppet valve flow paths) prevents potentially contaminated fluid at the outlet of the proportional pressure controller from backflowing into the pilot valves, which could inhibit their operation. One of the passageways can be used to simultaneously provide pressure to open one of the poppet valves while holding the second poppet valve in a closed position. By positioning a pressure sensing device in one of the isolated passageways, the pressure sensing device is also isolated from contaminants to improve the accuracy of the device's pressure signal. In addition, the proportional pressure controllers of the present disclosure operate to create a zero pressure condition at either the outlet port in the body of the proportional pressure controller or at the first discharge port of the isolation valve assembly. Beneficially, either the outlet port in the body of the proportional pressure controller or the first discharge port of the isolation valve assembly is configured to supply the pressurized fluid to a pressure controlled device, which may require the zero pressure condition during at least part of its operation.

## Claims

1. A proportional pressure controller (10") comprising:
a body (12") having an inlet flow passage (58), an outlet flow passage (34), an exhaust/outlet common passage (86) and an exhaust flow passage (88");
an inlet port (28) in the body (12") that opens to the inlet flow passage (58);
an outlet port (30") in the body (12") that opens to the outlet flow passage (34) and the exhaust/outlet common passage (86);
an exhaust port (32") in the body (12") that opens to the exhaust flow passage (88");
an inlet valve cavity (42) in the body (12") connecting the inlet flow passage (58) and the outlet flow passage (34);
an inlet poppet valve (36) slidably disposed in the inlet valve cavity (42) that is operable to control fluid flow between the inlet flow passage (58) and the outlet flow passage (34);
an exhaust valve cavity (82) in the body (12") connecting the exhaust/outlet common passage (86) and the exhaust flow passage (88");
an exhaust poppet valve (80) slidably disposed in the exhaust valve cavity (82) that is operable to control fluid flow between the exhaust/outlet common passage (86) and the exhaust flow passage (88"), wherein the inlet port (28) and the outlet port (30") are each created in a central body portion (22") of the body (12"), **characterized in that** the proportional pressure controller (10") further comprises an isolation valve assembly (110") integrated into the body (12") of the proportional pressure controller (10"), wherein the isolation valve assembly (110") is defined as an isolation valve cartridge (152) received in the central body portion (22") of the body (12"), the isolation valve cartridge (152) including an isolation valve cavity (112") in fluid communication with the outlet port (30") and an isolation valve member (114) slidably disposed in the isolation valve cavity (112"), the isolation valve member (114) being movable between an isolation valve closed position and an isolation valve open position;
wherein the proportional pressure controller (10") further comprises an actuator (142") controlling movement of the isolation valve member (114) between the isolation valve closed position and the isolation valve open position;
wherein the isolation valve member (114) prevents fluid from flowing through the outlet port (30") when the isolation valve member (114) is in the isolation valve closed position and permits fluid flow through the outlet port (30") when the isolation valve member (114) is in the isolation valve open position, wherein the isolation valve cavity (112") is defined by a cavity wall (116) that is formed in the isolation valve cartridge (152) and wherein the isolation valve cavity (112") has a first end (118) and a second end (120) that is opposite the first end (118), and wherein the isolation valve assembly (110") includes:
first and second seat members (128", 130") disposed along the cavity wall (116) of the isolation valve cavity (112"), the second seat member (130") being longitudinally spaced from the first seat member (128");
an intake port (132") disposed in fluid communication with the outlet port (30") in the housing such that the intake port (132") of the isolation valve assembly (110") is operable to receive fluid from the outlet flow passage (34) and the exhaust/outlet common passage (86) through the outlet port (30");
a first discharge port (134") that is positioned longitudinally between the first seat member (128") and the second seat member (130");
a second discharge port (136"), the intake port (132") and the second discharge port (136") being positioned on longitudinally opposite sides of the first discharge port (134"); and
first and second seat engagement members (138, 140) extending outwardly from the isolation valve member (114) at longitudinally spaced locations;
wherein in the isolation valve closed position, the first seat engagement member (138) contacts the first seat member (128") such that the pressurized fluid in the intake port (132") cannot flow to the first or second discharge ports (134", 136") and the second seat engagement member (140) is spaced from the second seat member (130") such that any fluid that is present at the first discharge port (134") is exhausted or expelled through the second discharge port (136").

2. A proportional pressure controller (10") as claimed in Claim 1, wherein the first seat engagement member (138) of the isolation valve member (114) contacts the first seat member (128") when the isolation valve member (114) is in the isolation valve closed position to fluidly isolate the intake port (132") from the first and second discharge ports (134", 136").

3. A proportional pressure controller (10") as claimed in Claim 1, wherein the first seat engagement member (138) of the isolation valve member (114) is displaced away from the first seat member (128") to permit fluid flow from the intake port (132"), through the isolation valve cavity (112"), and to the first discharge port (134") and wherein the second seat engagement member (140) of the isolation valve member (114) contacts the second seat member (130") when the isolation valve member (114) is in the isolation valve open position to fluidly isolate the second discharge port (136") from the first discharge port (134").

4. A proportional pressure controller (10") as claimed in any of Claims 1 to 3, wherein the isolation valve assembly (110") includes:
a first isolation valve piston (122) positioned along the isolation valve member (114) such that the first isolation valve piston (122) is slidably disposed within the first end (118) of the isolation valve cavity (112"), the first seat engagement member (138) being positioned longitudinally along the isolation valve member (114) between the first isolation valve piston (122) and the second seat engagement member (140); and
a second isolation valve piston (124) positioned along the isolation valve member (114) such that the second isolation valve piston (124) is opposite the first isolation valve piston (122) and is slidably disposed within the second end (120) of the isolation valve cavity (112"), the second seat engagement member (140) being positioned longitudinally along the isolation valve member (114) between the second isolation valve piston (124) and the first seat engagement member (138).

5. A proportional pressure controller (10") as claimed in any of Claims 1 to 4, wherein the isolation valve assembly (110") further includes an isolation valve pressurization chamber (126) that is open to the first end (118) of the isolation valve cavity (112") and wherein the actuator (142") includes an actuator valve (144") and an actuator valve passage (146"), the actuator valve (144") arranged in fluid communication with the inlet flow passage (58) and the isolation valve pressurization chamber (126), the actuator valve (144") operable to receive fluid from the inlet flow passage (58) and pressurize the isolation valve pressurization chamber (126) by supplying the fluid to the isolation valve pressurization chamber (126), and the actuator valve passage (146") extending between the actuator valve (144") and the isolation valve pressurization chamber (126) for communicating the fluid from the actuator valve (144") to the isolation valve pressurization chamber (126).

6. A proportional pressure controller (10") as claimed in Claim 5, wherein the isolation valve member (114) is biased to the isolation valve closed position and pressurization of the isolation valve pressurization chamber (126) by the actuator valve (144") operably moves the isolation valve member (114) to the isolation valve open position.

7. A proportional pressure controller (10") as claimed in any of Claims 1 to 6, wherein the isolation valve assembly (110") further comprises a vent passageway (150) extending through the isolation valve member (114) such that the first end (118) of the isolation valve cavity (112") remains in constant fluid communication with the second discharge port (136").

8. A proportional pressure controller (10") as claimed in any of Claims 1 to 7, further comprising:
a cylinder cavity (50) in the body (12") disposed adjacent the inlet valve cavity (42); and
a piston (44) slidably disposed in the cylinder cavity (50) and arranged to contact the inlet poppet valve (36) such that displacement of the piston (44) within the cylinder cavity (50) causes movement of the inlet poppet valve (36) within the inlet valve cavity (42).

9. A proportional pressure controller (10") as claimed in Claim 8, further comprising:
a piston pressurization chamber (68) in the body (12") that is open to the cylinder cavity (50); and
a fill valve (54) arranged in fluid communication with the inlet flow passage (58) and the piston pressurization chamber (68), the fill valve (54) operable to receive fluid from the inlet flow passage (58) and pressurize the piston pressurization chamber (68) by supplying the fluid to the piston pressurization chamber (68);
wherein the fluid supplied to the piston pressurization chamber (68) is operable to exert a first force on the piston (44) such that the piston (44) is displaced within the cylinder cavity (50) and moves the inlet poppet valve (36) when the fill valve (54) pressurizes the piston pressurization chamber (68).

10. A proportional pressure controller (10") as claimed in Claim 9, further comprising:
an exhaust valve pressurization chamber (76) in the body (12") that is open to the exhaust valve cavity (82);
wherein the fill valve (54) is arranged in fluid communication with the exhaust valve pressurization chamber (76) and the fill valve (54) is operable to pressurize the exhaust valve pressurization chamber (76) by supplying the fluid to the exhaust valve pressurization chamber (76);
wherein the fluid supplied to the exhaust valve pressurization chamber (76) is operable to exert a second force on the exhaust poppet valve (80) to hold the exhaust poppet valve (80) closed.

11. A proportional pressure controller (10") as claimed in Claim 10, further comprising:
a fill inlet passage (62) in the body (12") that extends between the inlet flow passage (58) and the fill valve (54) for communicating the fluid from the inlet flow passage (58) to the fill valve (54); and
a fill valve discharge passage (64) in the body (12") that extends between the fill valve (54), the piston pressurization chamber (68) and the exhaust valve pressurization chamber (76) for communicating the fluid from the fill valve (54) to the piston pressurization chamber (68) and the exhaust valve pressurization chamber (76).

12. A proportional pressure controller (10") as claimed in Claim 11, further comprising:
a dump valve (56) arranged in fluid communication with the fill valve discharge passage (64) and the exhaust flow passage (88"), the dump valve (56) operable to direct the fluid in the fill valve discharge passage (64) to the exhaust flow passage (88") such that fluid pressure in the fill valve discharge passage (64), the piston pressurization chamber (68) and the exhaust valve pressurization chamber (76) is reduced when the dump valve (56) is actuated.

13. A proportional pressure controller (10") as claimed in Claim 12, further comprising:
a dump valve passage (98) in the body (12") that extends between the dump valve (56) and the exhaust flow passage (88") for communicating the fluid from the dump valve (56) to the exhaust flow passage (88"), a dump valve exhaust port (100") that opens to an outer surface of the body (12") and the second discharge port (136") of the isolation valve assembly (110").

14. A proportional pressure controller (10") as claimed in Claim 12 or 13, wherein the reduction in fluid pressure in the piston pressurization chamber (68) caused by actuation of the dump valve (56) operably relieves the first force from the piston (44), and the second force from the exhaust poppet valve (80) allowing the exhaust poppet valve (80) to open in response to a third force exerted on the exhaust poppet valve (80) by fluid in the exhaust/outlet common passage (86) of the body (12").

15. A proportional pressure controller (10") as claimed in any of Claims 12 to 14, further including:
a first pressure signaling device (109a) positioned in the fill valve discharge passage (64) that is operable to output a first pressure signal;
a control system (106) electrically connected to the first pressure signaling device (109a) that is operable to receive the first pressure signal from the first pressure signaling device (109a) and control actuation of the fill valve (54), the dump valve (56) and the actuator valve (144") in response to the first pressure signal; and
a second pressure signaling device (109b) positioned in the outlet flow passage (34) that is operable to output a second pressure signal, the second pressure signaling device (109b) electrically connected to the control system (106) such that the control system (106) is operable to receive the second pressure signal from the second pressure signaling device (109b) and control actuation of the fill valve (54), the dump valve (56) and the actuator valve (144") in response to both the first pressure signal from the first pressure signaling device (109a) and the second pressure signal from the second pressure signaling device (109b).

## Patentansprüche

1. Ein proportionaler Druckregler (10"), der Folgendes beinhaltet:
einen Körper (12") mit einem Einlassströmungskanal (58), einem Auslassströmungskanal (34), einem gemeinsamen Abführungs-/Auslasskanal (86) und einem Abführungsströmungskanal (88");
eine Einlassöffnung (28) in dem Körper (12"), die sich zu dem Einlassströmungskanal (58) hin öffnet;
eine Auslassöffnung (30") in dem Körper (12"), die sich zu dem Auslassströmungskanal (34) und dem gemeinsamen Abführungs-/Auslasskanal (86) hin öffnet;
eine Abführungsöffnung (32") in dem Körper (12"), die sich zu dem Abführungsströmungskanal (88") hin öffnet;
einen Einlassventilhohlraum (42) in dem Körper (12"), der den Einlassströmungskanal (58) und den Auslassströmungskanal (34) verbindet;
ein Einlasstellerventil (36), das gleitend in dem Einlassventilhohlraum (42) angeordnet ist und bedienbar ist, um die Fluidströmung zwischen dem Einlassströmungskanal (58) und dem Auslassströmungskanal (34) zu steuern;
einen Abführungsventilhohlraum (82) in dem Körper (12"), der den gemeinsamen Abführungs-/Auslasskanal (86) und den Abführungsströmungskanal (88") verbindet; ein Abführungstellerventil (80), das gleitend in dem Abführungsventilhohlraum (82) angeordnet ist und bedienbar ist, um die Fluidströmung zwischen dem gemeinsamen Abführungs-/Auslasskanal (86) und dem Abführungsströmungskanal (88") zu steuern, wobei die Einlassöffnung (28) und die Auslassöffnung (30") jeweils in einem zentralen Körperabschnitt (22") des Körpers (12") erzeugt sind, **dadurch gekennzeichnet, dass** der proportionale Druckregler (10") ferner eine in den Körper (12") des proportionalen Druckreglers (10") integrierte Absperrventilanordnung (110") beinhaltet, wobei die Absperrventilanordnung (110") als eine Absperrventilpatrone (152) definiert ist, die in dem zentralen Körperabschnitt (22") des Körpers (12") aufgenommen ist, wobei die Absperrventilpatrone (152) einen Absperrventilhohlraum (112"), der in Fluidkommunikation mit der Auslassöffnung (30") steht, und ein Absperrventilelement (114) umfasst, das gleitend in dem Absperrventilhohlraum (112") angeordnet ist, wobei das Absperrventilelement (114) zwischen einer geschlossenen Position des Absperrventils und einer geöffneten Position des Absperrventils bewegt werden kann;
wobei der proportionale Druckregler (10") ferner einen Aktor (142") beinhaltet, der die Bewegung des Absperrventilelements (114) zwischen der geschlossenen Position des Absperrventils und der geöffneten Position des Absperrventils steuert;
wobei das Absperrventilelement (114) verhindert, dass Fluid durch die Auslassöffnung (30") strömt, wenn sich das Absperrventilelement (114) in der geschlossenen Position des Absperrventils befindet, und zulässt, dass Fluid durch die Auslassöffnung (30") strömt, wenn sich das Absperrventilelement (114) in der offenen Position des Absperrventils befindet, wobei der Absperrventilhohlraum (112") durch eine Hohlraumwand (116) definiert ist, die in der Absperrventilpatrone (152) gebildet ist, und
wobei der Absperrventilhohlraum (112") ein erstes Ende (118) und ein dem ersten Ende (118) gegenüberliegendes zweites Ende (120) aufweist, und wobei die Absperrventilanordnung (110") Folgendes umfasst:
ein erstes und ein zweites Sitzelement (128", 130"), die entlang der Hohlraumwand (116) des Absperrventilhohlraums (112") angeordnet sind, wobei das zweite Sitzelement (130") in Längsrichtung von dem ersten Sitzelement (128") beabstandet ist;
eine Einlauföffnung (132"), die in Fluidkommunikation mit der Auslassöffnung (30") in dem Gehäuse angeordnet ist, sodass die Einlauföffnung (132") der Absperrventilanordnung (110") bedienbar ist, um Fluid von dem Auslassströmungskanal (34) und dem gemeinsamen Abführungs-/Auslasskanal (86) durch die Auslassöffnung (30") zu empfangen;
eine erste Entladeöffnung (134"), die in Längsrichtung zwischen dem ersten Sitzelement (128") und dem zweiten Sitzelement (130") positioniert ist;
eine zweite Entladeöffnung (136"), wobei die Einlauföffnung (132") und die zweite Entladeöffnung (136") auf in Längsrichtung gegenüberliegenden Seiten der ersten Entladeöffnung (134") positioniert sind; und
ein erstes und ein zweites Sitzeingriffselement (138, 140), die sich von dem Absperrventilelement (114) an in Längsrichtung beabstandeten Stellen nach außen erstrecken;
wobei in der geschlossenen Position des Absperrventils das erste Sitzeingriffselement (138) mit dem ersten Sitzelement (128") in Kontakt kommt, sodass das unter Druck stehende Fluid in der Einlauföffnung (132") nicht zu der ersten oder der zweiten Entladeöffnung (134", 136") strömen kann, und das zweite Sitzeingriffselement (140) von dem zweiten Sitzelement (130") beabstandet ist, sodass jegliches Fluid, das an der ersten Entladeöffnung (134") vorhanden ist, durch die zweite Entladeöffnung (136") abgeführt oder ausgestoßen wird.

2. Proportionaler Druckregler (10") gemäß Anspruch 1, wobei das erste Sitzeingriffselement (138) des Absperrventilelements (114) mit dem ersten Sitzelement (128") in Kontakt kommt, wenn sich das Absperrventilelement (114) in der geschlossenen Position des Absperrventils befindet, um die Einlauföffnung (132") von der ersten und der zweiten Entladeöffnung (134", 136") fluidisch zu isolieren.

3. Proportionaler Druckregler (10") gemäß Anspruch 1, wobei das erste Sitzeingriffselement (138) des Absperrventilelements (114) von dem ersten Sitzelement (128") weg verschoben wird, um Fluidströmung von der Einlauföffnung (132") durch den Absperrventilhohlraum (112") und zu der ersten Entladeöffnung (134") zu ermöglichen, und wobei das zweite Sitzeingriffselement (140) des Absperrventilelements (114) mit dem zweiten Sitzelement (130") in Kontakt kommt, wenn sich das Absperrventilelement (114) in der offenen Position des Absperrventils befindet, um die zweite Entladeöffnung (136") von der ersten Entladeöffnung (134") fluidisch zu isolieren.

4. Proportionaler Druckregler (10") gemäß einem der Ansprüche 1 bis 3, wobei die Absperrventilanordnung (110") Folgendes umfasst:
einen ersten Absperrventilkolben (122), der entlang des Absperrventilelements (114) positioniert ist, sodass der erste Absperrventilkolben (122) gleitend innerhalb des ersten Endes (118) des Absperrventilhohlraums (112") angeordnet ist, wobei das erste Sitzeingriffselement (138) in Längsrichtung entlang des Absperrventilelements (114) zwischen dem ersten Absperrventilkolben (122) und dem zweiten Sitzeingriffselement (140) positioniert ist; und
einen zweiten Absperrventilkolben (124), der entlang des Absperrventilelements (114) positioniert ist, sodass der zweite Absperrventilkolben (124) dem ersten Absperrventilkolben (122) gegenüberliegt und gleitend innerhalb des zweiten Endes (120) des Absperrventilhohlraums (112") angeordnet ist, wobei das zweite Sitzeingriffselement (140) in Längsrichtung entlang des Absperrventilelements (114) zwischen dem zweiten Absperrventilkolben (124) und dem ersten Sitzeingriffselement (138) positioniert ist.

5. Proportionaler Druckregler (10") gemäß einem der Ansprüche 1 bis 4, wobei die Absperrventilanordnung (110") ferner eine Absperrventildruckkammer (126) umfasst, die zu dem ersten Ende (118) des Absperrventilhohlraums (112") hin offen ist, und wobei der Aktor (142") ein Aktorventil (144") und einen Aktorventilkanal (146") umfasst, wobei das Aktorventil (144") in Fluidkommunikation mit dem Einlassströmungskanal (58) und der Absperrventildruckkammer (126) eingerichtet ist, das Aktorventil (144") bedienbar ist, um Fluid von dem Einlassströmungskanal (58) zu empfangen und die Absperrventildruckkammer (126) unter Druck zu setzen, indem das Fluid der Absperrventildruckkammer (126) zugeführt wird, und der Aktorventilkanal (146") sich zwischen dem Aktorventil (144") und der Absperrventildruckkammer (126) erstreckt, um das Fluid von dem Aktorventil (144") zu der Absperrventildruckkammer (126) weiterzuleiten.

6. Proportionaler Druckregler (10") gemäß Anspruch 5, wobei das Absperrventilelement (114) in die geschlossene Position des Absperrventils vorgespannt ist und die Druckbeaufschlagung der Absperrventildruckkammer (126) durch das Aktorventil (144") das Absperrventilelement (114) bedienbar in die offene Position des Absperrventils bewegt.

7. Proportionaler Druckregler (10") gemäß einem der Ansprüche 1 bis 6, wobei die Absperrventilanordnung (110") ferner einen Entlüftungsdurchgang (150) beinhaltet, der sich durch das Absperrventilelement (114) erstreckt, sodass das erste Ende (118) des Absperrventilhohlraums (112") in ständiger Fluidkommunikation mit der zweiten Entladeöffnung (136") bleibt.

8. Proportionaler Druckregler (10") gemäß einem der Ansprüche 1 bis 7, der ferner Folgendes beinhaltet:
einen Zylinderhohlraum (50) in dem Körper (12"), der angrenzend an den Einlassventilhohlraum (42) angeordnet ist; und
einen Kolben (44), der gleitend in dem Zylinderhohlraum (50) angeordnet und so eingerichtet ist, dass er mit dem Einlasstellerventil (36) in Kontakt kommt, sodass eine Verschiebung des Kolbens (44) innerhalb des Zylinderhohlraums (50) eine Bewegung des Einlasstellerventils (36) innerhalb des Einlassventilhohlraums (42) bewirkt.

9. Proportionaler Druckregler (10") gemäß Anspruch 8, der ferner Folgendes beinhaltet:
eine Kolbendruckbeaufschlagungskammer (68) in dem Körper (12"), die zu dem Zylinderhohlraum (50) hin offen ist; und
ein Füllventil (54), das in Fluidkommunikation mit dem Einlassströmungskanal (58) und der Kolbendruckbeaufschlagungskammer (68) eingerichtet ist, wobei das Füllventil (54) bedienbar ist, um Fluid von dem Einlassströmungskanal (58) zu empfangen und die Kolbendruckkammer (68) durch Zuführen des Fluids zu der Kolbendruckbeaufschlagungskammer (68) unter Druck zu setzen;
wobei das der Kolbendruckbeaufschlagungskammer (68) zugeführte Fluid bedienbar ist, um eine erste Kraft auf den Kolben (44) auszuüben, sodass der Kolben (44) innerhalb des Zylinderhohlraums (50) verschoben wird und das Einlasstellerventil (36) bewegt, wenn das Füllventil (54) die Kolbendruckbeaufschlagungskammer (68) unter Druck setzt.

10. Proportionaler Druckregler (10") gemäß Anspruch 9, der ferner Folgendes beinhaltet:
eine Abführungsventildruckbeaufschlagungskammer (76) in dem Körper (12"), die zu dem Abführungsventilhohlraum (82) hin offen ist;
wobei das Füllventil (54) in Fluidkommunikation mit der Abführungsventildruckbeaufschlagungskammer (76) eingerichtet ist und das Füllventil (54) bedienbar ist, um die Abführungsventildruckbeaufschlagungskammer (76) durch Zuführen des Fluids zu der Abführungsventildruckbeaufschlagungskammer (76) unter Druck zu setzen;
wobei das der Abführungsventildruckbeaufschlagungskammer (76) zugeführte Fluid bedienbar ist, um eine zweite Kraft auf das Abführungstellerventil (80) auszuüben, um das Abführungstellerventil (80) geschlossen zu halten.

11. Proportionaler Druckregler (10") gemäß Anspruch 10, der ferner Folgendes beinhaltet:
einen Fülleinlasskanal (62) in dem Körper (12"), der sich zwischen dem Einlassströmungskanal (58) und dem Füllventil (54) erstreckt, um das Fluid von dem Einlassströmungskanal (58) zu dem Füllventil (54) weiterzuleiten; und
einen Füllventilentladekanal (64) in dem Körper (12"), der sich zwischen dem Füllventil (54), der Kolbendruckbeaufschlagungskammer (68) und der Abführungsventildruckbeaufschlagungskammer (76) erstreckt, um das Fluid von dem Füllventil (54) zu der Kolbendruckbeaufschlagungskammer (68) und der Abführungsventildruckbeaufschlagungskammer (76) weiterzuleiten.

12. Proportionaler Druckregler (10") gemäß Anspruch 11, der ferner Folgendes beinhaltet: ein Entleerventil (56), das in Fluidkommunikation mit dem Füllventilentladekanal (64) und dem Abführungsströmungskanal (88") eingerichtet ist, wobei das Entleerventil (56) bedienbar ist, um das Fluid in dem Füllventilentladekanal (64) zu dem Abführungsströmungskanal (88") zu leiten, sodass Fluiddruck in dem Füllventilentladekanal (64), der Kolbendruckbeaufschlagungskammer (68) und der Abführungsventildruckbeaufschlagungskammer (76) reduziert wird, wenn das Entleerventil (56) betätigt wird.

13. Proportionaler Druckregler (10") gemäß Anspruch 12, der ferner Folgendes beinhaltet: einen Entleerventilkanal (98) in dem Körper (12"), der sich zwischen dem Entleerventil (56) und dem Abführungsströmungskanal (88") erstreckt, um das Fluid von dem Entleerventil (56) zu dem Abführungsströmungskanal (88") weiterzuleiten, eine Entleerventilabführungsöffnung (100"), die sich zu einer Außenfläche des Körpers (12") und der zweiten Entladeöffnung (136") der Absperrventilanordnung (110") hin öffnet.

14. Proportionaler Druckregler (10") gemäß Anspruch 12 oder 13, wobei die durch die Betätigung des Entleerventils (56) verursachte Reduzierung des Fluiddrucks in der Kolbendruckbeaufschlagungskammer (68) die erste Kraft von dem Kolben (44) und die zweite Kraft von dem Abführungstellerventil (80) wirksam entlastet, was ermöglicht, dass sich das Abführungstellerventil (80) als Reaktion auf eine dritte Kraft öffnen kann, die durch Fluid in dem gemeinsamen Abführungs-/Auslasskanal (86) des Körpers (12") auf das Abführungstellerventil (80) ausgeübt wird.

15. Proportionaler Druckregler (10") gemäß einem der Ansprüche 12 bis 14, der ferner Folgendes umfasst:
eine erste Drucksignalisierungsvorrichtung (109a), die in dem Füllventilentladekanal (64) positioniert ist und bedienbar ist, um ein erstes Drucksignal auszugeben;
ein Steuersystem (106), das elektrisch mit der ersten Drucksignalisierungsvorrichtung (109a) verbunden ist und bedienbar ist, um das erste Drucksignal von der ersten Drucksignalisierungsvorrichtung (109a) zu empfangen und die Betätigung des Füllventils (54), des Entleerventils (56) und des Aktorventils (144") als Reaktion auf das erste Drucksignal zu steuern; und
eine zweite Drucksignalisierungsvorrichtung (109b), die in dem Auslassströmungskanal (34) positioniert ist und bedienbar ist, um ein zweites Drucksignal auszugeben, wobei die zweite Drucksignalisierungsvorrichtung (109b) elektrisch mit dem Steuersystem (106) verbunden ist, sodass das Steuersystem (106) bedienbar ist, um das zweite Drucksignal von der zweiten Drucksignalisierungsvorrichtung (109b) zu empfangen und die Betätigung des Füllventils (54), des Entleerventils (56) und des Aktorventils (144") als Reaktion sowohl auf das erste Drucksignal von der ersten Drucksignalisierungsvorrichtung (109a) als auch auf das zweite Drucksignal von der zweiten Drucksignalisierungsvorrichtung (109b) zu steuern.

## Revendications

1. Un régulateur de pression proportionnel (10") comprenant :
un corps (12") ayant un passage d'écoulement d'entrée (58), un passage d'écoulement de sortie (34), un passage commun évacuation/sortie (86) et un passage d'écoulement d'évacuation (88") ;
un orifice d'entrée (28) dans le corps (12") qui s'ouvre sur le passage d'écoulement d'entrée (58) ;
un orifice de sortie (30") dans le corps (12") qui s'ouvre sur le passage d'écoulement de sortie (34) et le passage commun évacuation/sortie (86) ;
un orifice d'évacuation (32") dans le corps (12") qui s'ouvre sur le passage d'écoulement d'évacuation (88") ;
une cavité de soupape d'entrée (42) dans le corps (12") raccordant le passage d'écoulement d'entrée (58) et le passage d'écoulement de sortie (34) ;
une soupape à champignon d'entrée (36) disposée de façon à pouvoir coulisser dans la cavité de soupape d'entrée (42) qui peut fonctionner pour réguler un écoulement de fluide entre le passage d'écoulement d'entrée (58) et le passage d'écoulement de sortie (34) ;
une cavité de soupape d'évacuation (82) dans le corps (12") raccordant le passage commun évacuation/sortie (86) et le passage d'écoulement d'évacuation (88") ;
une soupape à champignon d'évacuation (80) disposée de façon à pouvoir coulisser dans la cavité de soupape d'évacuation (82) qui peut fonctionner pour réguler un écoulement de fluide entre le passage commun évacuation/sortie (86) et le passage d'écoulement d'évacuation (88"), où l'orifice d'entrée (28) et l'orifice de sortie (30") sont chacun créés dans une portion de corps centrale (22") du corps (12"), **caractérisé en ce que** le régulateur de pression proportionnel (10") comprend en outre un ensemble formant soupape d'isolement (110") intégré au corps (12") du régulateur de pression proportionnel (10"), où l'ensemble formant soupape d'isolement (110") est défini comme une cartouche de soupape d'isolement (152) reçue dans la portion de corps centrale (22") du corps (12"), la cartouche de soupape d'isolement (152) incluant une cavité de soupape d'isolement (112") en communication fluidique avec l'orifice de sortie (30") et un élément de soupape d'isolement (114) disposé de façon à pouvoir coulisser dans la cavité de soupape d'isolement (112"), l'élément de soupape d'isolement (114) étant déplaçable entre une portion fermée de soupape d'isolement et une position ouverte de soupape d'isolement ;
où le régulateur de pression proportionnel (10") comprend en outre un actionneur (142") commandant un déplacement de l'élément de soupape d'isolement (114) entre la position fermée de soupape d'isolement et la position ouverte de soupape d'isolement ;
où l'élément de soupape d'isolement (114) empêche du fluide de s'écouler à travers l'orifice de sortie (30") lorsque l'élément de soupape d'isolement (114) se trouve dans la position fermée de soupape d'isolement et permet à du fluide de s'écouler à travers l'orifice de sortie (30") lorsque l'élément de soupape d'isolement (114) se trouve dans la position ouverte de soupape d'isolement, où la cavité de soupape d'isolement (112") est définie par une paroi de cavité (116) qui est formée dans la cartouche de soupape d'isolement (152) et où la cavité de soupape d'isolement (112") a une première extrémité (118) et une deuxième extrémité (120) qui est opposée à la première extrémité (118), et où l'ensemble formant soupape d'isolement (110") inclut :
des premier et deuxième éléments formant siège (128", 130") disposés le long de la paroi de cavité (116) de la cavité de soupape d'isolement (112"), le deuxième élément formant siège (130") étant espacé longitudinalement du premier élément formant siège (128") ;
un orifice d'admission (132") disposé en communication fluidique avec l'orifice de sortie (30") dans le logement de telle sorte que l'orifice d'admission (132") de l'ensemble formant soupape d'isolement (110") peut fonctionner pour recevoir du fluide en provenance du passage d'écoulement de sortie (34) et du passage commun évacuation/sortie (86) à travers l'orifice de sortie (30") ;
un premier orifice de décharge (134") qui est positionné longitudinalement entre le premier élément formant siège (128") et le deuxième élément formant siège (130") ;
un deuxième orifice de décharge (136"), l'orifice d'admission (132") et le deuxième orifice de décharge (136") étant positionnés sur des côtés longitudinalement opposés du premier orifice de décharge (134") ; et
des premier et deuxième éléments de mise en prise avec un siège (138, 140) s'étendant vers l'extérieur depuis l'élément de soupape d'isolement (114) au niveau d'emplacements espacés longitudinalement ;
où, dans la position fermée de soupape d'isolement, le premier élément de mise en prise avec un siège (138) est en contact avec le premier élément formant siège (128") de telle sorte que le fluide sous pression dans l'orifice d'admission (132") ne peut pas s'écouler vers les premier ou deuxième orifices de décharge (134", 136") et le deuxième élément de mise en prise avec un siège (140) est espacé du deuxième élément formant siège (130") de telle sorte que tout fluide présent au niveau du premier orifice de décharge (134") est évacué ou expulsé à travers le deuxième orifice de décharge (136").

2. Un régulateur de pression proportionnel (10") tel que revendiqué dans la revendication 1, où le premier élément de mise en prise avec un siège (138) de l'élément de soupape d'isolement (114) est en contact avec le premier élément formant siège (128") lorsque l'élément de soupape d'isolement (114) se trouve dans la position fermée de soupape d'isolement afin d'isoler fluidiquement l'orifice d'admission (132") des premier et deuxième orifices de décharge (134", 136").

3. Un régulateur de pression proportionnel (10") tel que revendiqué dans la revendication 1, où le premier élément de mise en prise avec un siège (138) de l'élément de soupape d'isolement (114) est amené à bouger à l'écart du premier élément formant siège (128") afin de permettre un écoulement de fluide depuis l'orifice d'admission (132"), à travers la cavité de soupape d'isolement (112"), et jusqu'au premier orifice de décharge (134") et où le deuxième élément de mise en prise avec un siège (140) de l'élément de soupape d'isolement (114) est en contact avec le deuxième élément formant siège (130") lorsque l'élément de soupape d'isolement (114) se trouve dans la position ouverte de soupape d'isolement afin d'isoler fluidiquement le deuxième orifice de décharge (136") du premier orifice de décharge (134").

4. Un régulateur de pression proportionnel (10") tel que revendiqué dans n'importe lesquelles des revendications 1 à 3, où l'ensemble formant soupape d'isolement (110") inclut :
un premier piston de soupape d'isolement (122) positionné le long de l'élément de soupape d'isolement (114) de telle sorte que le premier piston de soupape d'isolement (122) est disposé de façon à pouvoir coulisser au sein de la première extrémité (118) de la cavité de soupape d'isolement (112"), le premier élément de mise en prise avec un siège (138) étant positionné longitudinalement le long de l'élément de soupape d'isolement (114) entre le premier piston de soupape d'isolement (122) et le deuxième élément de mise en prise avec un siège (140) ; et
un deuxième piston de soupape d'isolement (124) positionné le long de l'élément de soupape d'isolement (114) de telle sorte que le deuxième piston de soupape d'isolement (124) est opposé au premier piston de soupape d'isolement (122) et est disposé de façon à pouvoir coulisser au sein de la deuxième extrémité (120) de la cavité de soupape d'isolement (112"), le deuxième élément de mise en prise avec un siège (140) étant positionné longitudinalement le long de l'élément de soupape d'isolement (114) entre le deuxième piston de soupape d'isolement (124) et le premier élément de mise en prise avec un siège (138).

5. Un régulateur de pression proportionnel (10") tel que revendiqué dans n'importe lesquelles des revendications 1 à 4, où l'ensemble de soupape d'isolement (110") inclut en outre une chambre de pressurisation de soupape d'isolement (126) qui est ouverte sur la première extrémité (118) de la cavité de soupape d'isolement (112") et où l'actionneur (142") inclut une soupape d'actionneur (144") et un passage de soupape d'actionneur (146"), la soupape d'actionneur (144") étant agencé en communication fluidique avec le passage d'écoulement d'entrée (58) et la chambre de pressurisation de soupape d'isolement (126), la soupape d'actionneur (144") pouvant fonctionner pour recevoir du fluide en provenance du passage d'écoulement d'entrée (58) et pressuriser la chambre de pressurisation de soupape d'isolement (126) en apportant le fluide à la chambre de pressurisation de soupape d'isolement (126), et le passage de soupape d'actionneur (146") s'étendant entre la soupape d'actionneur (144") et la chambre de pressurisation de soupape d'isolement (126) pour communiquer le fluide de la soupape d'actionneur (144") à la chambre de pressurisation de soupape d'isolement (126).

6. Un régulateur de pression proportionnel (10") tel que revendiqué dans la revendication 5, où l'élément de soupape d'isolement (114) est sollicité vers la position fermée de soupape d'isolement et une pressurisation de la chambre de pressurisation de soupape d'isolement (126) par le fait que la soupape d'actionneur (144") déplace de façon fonctionnelle l'élément de soupape d'isolement (114) vers la position ouverte de soupape d'isolement.

7. Un régulateur de pression proportionnel (10") tel que revendiqué dans n'importe lesquelles des revendications 1 à 6, où l'ensemble formant soupape d'isolement (110") comprend en outre une voie de passage d'évent (150) s'étendant à travers l'élément de soupape d'isolement (114) de telle sorte que la première extrémité (118) de la cavité de soupape d'isolement (112") demeure en communication fluidique constante avec le deuxième orifice de décharge (136").

8. Un régulateur de pression proportionnel (10") tel que revendiqué dans n'importe lesquelles des revendications 1 à 7, comprenant en outre :
une cavité de cylindre (50) dans le corps (12") disposée de façon adjacente à la cavité de soupape d'entrée (42) ; et
un piston (44) disposé de façon à pouvoir coulisser dans la cavité de cylindre (50) et agencé pour être en contact avec la soupape à champignon d'entrée (36) de telle sorte que le fait que le piston (44) bouge au sein de la cavité de cylindre (50) amène un déplacement de la soupape à champignon d'entrée (36) au sein de la cavité de soupape d'entrée (42).

9. Un régulateur de pression proportionnel (10") tel que revendiqué dans la revendication 8, comprenant en outre :
une chambre de pressurisation de piston (68) dans le corps (12") qui est ouverte sur la cavité de cylindre (50) ; et
une soupape de remplissage (54) agencée en communication fluidique avec le passage d'écoulement d'entrée (58) et la chambre de pressurisation de piston (68), la soupape de remplissage (54) pouvant fonctionner pour recevoir du fluide en provenance du passage d'écoulement d'entrée (58) et pressuriser la chambre de pressurisation de piston (68) en apportant le fluide à la chambre de pressurisation de piston (68) ;
où le fluide apporté à la chambre de pressurisation de piston (68) peut fonctionner pour exercer une première force sur le piston (44) de telle sorte que le piston (44) est amené à bouger au sein de la cavité de cylindre (50) et déplace la soupape à champignon d'entrée (36) lorsque la soupape de remplissage (54) pressurise la chambre de pressurisation de piston (68).

10. Un régulateur de pression proportionnel (10") tel que revendiqué dans la revendication 9, comprenant en outre :
une chambre de pressurisation de soupape d'évacuation (76) dans le corps (12") qui est ouverte sur la cavité de soupape d'évacuation (82) ;
où la soupape de remplissage (54) est agencée en communication fluidique avec la chambre de pressurisation de soupape d'évacuation (76) et la soupape de remplissage (54) peut fonctionner pour pressuriser la chambre de pressurisation de soupape d'évacuation (76) en apportant le fluide à la chambre de pressurisation de soupape d'évacuation (76) ;
où le fluide apporté à la chambre de pressurisation de soupape d'évacuation (76) peut fonctionner pour exercer une deuxième force sur la soupape à champignon d'évacuation (80) pour maintenir la soupape à champignon d'évacuation (80) fermée.

11. Un régulateur de pression proportionnel (10") tel que revendiqué dans la revendication 10, comprenant en outre :
un passage d'entrée de remplissage (62) dans le corps (12") qui s'étend entre le passage d'écoulement d'entrée (58) et la soupape de remplissage (54) pour communiquer le fluide du passage d'écoulement d'entrée (58) à la soupape de remplissage (54) ; et
un passage de décharge de soupape de remplissage (64) dans le corps (12") qui s'étend entre la soupape de remplissage (54), la chambre de pressurisation de piston (68) et la chambre de pressurisation de soupape d'évacuation (76) pour communiquer le fluide de la soupape de remplissage (54) à la chambre de pressurisation de piston (68) et la chambre de pressurisation de soupape d'évacuation (76).

12. Un régulateur de pression proportionnel (10") tel que revendiqué dans la revendication 11, comprenant en outre :
une soupape de drainage (56) agencée en communication fluidique avec le passage de décharge de soupape de remplissage (64) et le passage d'écoulement d'évacuation (88"), la soupape de drainage (56) pouvant fonctionner pour diriger le fluide dans le passage de décharge de soupape de remplissage (64) vers le passage d'écoulement d'évacuation (88") de telle sorte qu'une pression de fluide dans le passage de décharge de soupape de remplissage (64), la chambre de pressurisation de piston (68) et la chambre de pressurisation de soupape d'évacuation (76) est réduite lorsque la soupape de drainage (56) est actionnée.

13. Un régulateur de pression proportionnel (10") tel que revendiqué dans la revendication 12, comprenant en outre :
un passage de soupape de drainage (98) dans le corps (12") qui s'étend entre la soupape de drainage (56) et le passage d'écoulement d'évacuation (88") pour communiquer le fluide de la soupape de drainage (56) au passage d'écoulement d'évacuation (88"), un orifice d'évacuation de soupape de drainage (100") qui s'ouvre sur une surface externe du corps (12") et le deuxième orifice de décharge (136") de l'ensemble de soupape d'isolement (110").

14. Un régulateur de pression proportionnel (10") tel que revendiqué dans la revendication 12 ou la revendication 13, où la réduction dans la pression de fluide dans la chambre de pressurisation de piston (68) provoquée par l'actionnement de la soupape de drainage (56) atténue de façon fonctionnelle la première force en provenance du piston (44), et la deuxième force en provenance de la soupape à champignon d'évacuation (80) permettant à la soupape à champignon d'évacuation (80) de s'ouvrir en réponse à une troisième force exercée sur la soupape à champignon d'évacuation (80) par du fluide dans le passage commun évacuation/sortie (86) du corps (12").

15. Un régulateur de pression proportionnel (10") tel que revendiqué dans n'importe lesquelles des revendications 12 à 14, incluant en outre :
un premier dispositif de signalisation de pression (109a) positionné dans le passage de décharge de soupape de remplissage (64) qui peut fonctionner pour sortir un premier signal de pression ;
un système de commande (106) raccordé électriquement au premier dispositif de signalisation de pression (109a) qui peut fonctionner pour recevoir le premier signal de pression en provenance du premier dispositif de signalisation de pression (109a) et commander l'actionnement de la soupape de remplissage (54), la soupape de drainage (56) et la soupape d'actionneur (144") en réponse au premier signal de pression ; et
un deuxième dispositif de signalisation de pression (109b) positionné dans le passage d'écoulement de sortie (34) qui peut fonctionner pour sortir un deuxième signal de pression, le deuxième dispositif de signalisation de pression (109b) étant raccordé électriquement au système de commande (106) de telle sorte que le système de commande (106) peut fonctionner pour recevoir le deuxième signal de pression en provenance du deuxième dispositif de signalisation de pression (109b) et commander l'actionnement de la soupape de remplissage (54), la soupape de drainage (56) et la soupape d'actionneur (144") en réponse à à la fois le premier signal de pression en provenance du premier dispositif de signalisation de pression (109a) et le deuxième signal de pression en provenance du deuxième dispositif de signalisation de pression (109b).
